# EUROPEAN PATENT APPLICATION

(11) **EP 3 667 996 A1**
(43) Date of publication of application: **17.06.2020**
(21) Application number: 18852219.7
(22) Date of filing: 28.08.2018
(51) Int. Cl.: H04L 5/00

(54) **SIGNAL SENDING METHOD AND DEVICE**

(30) Priority: 29.08.2017 CN 201710756460
(71) Applicant: Huawei Technologies Co., Ltd., Longgang District Shenzhen, Guangdong 518129 (CN)
(72) Inventor: LIU, Jinnan, Shenzhen Guangdong 518129 (CN); LI, Dejian, Shenzhen Guangdong 518129 (CN); CHEN, Jiamin, Shenzhen Guangdong 518129 (CN)
(74) Representative: Epping - Hermann - Fischer
(86) International application number: PCT/CN2018/102782
(87) International publication number: WO 2019/042291

(57) **Abstract**

A signal sending method and a device are provided. The method includes: generating, by a first device, at least one first signal based on an i^{th} set of parameters in a first parameter; sending, by the first device, the at least one first signal to a second device on an unlicensed carrier; generating, by the first device, at least one second signal based on a j^{th} set of parameters in a second parameter; and sending, by the first device, the at least one second signal to the second device on a licensed carrier, where N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ). According to the method and the device that are in this application, hardware or software in a 5G licensed frequency band can be reused while it is ensured that a coexistence requirement of a 60 GHz frequency band is met.

## Description

This application claims priority to Chinese Patent Application No. 201710756460.0, filed with the Chinese Patent Office on August 29, 2017 and entitled "SIGNAL SENDING METHOD AND DEVICE", which is incorporated herein by reference in its entirety.

### TECHNICAL FIELD

This application relates to the field of wireless communications technologies, and in particular, to a signal sending method and a device.

### BACKGROUND

An orthogonal frequency division multiplexing (Orthogonal Frequency Division Multiplexing, OFDM) technology is frequently used in wireless communication, and is widely used in different communications systems, for example, a 3rd generation partnership project (3rd Generation Partnership Project, 3GPP) system in which a licensed spectrum is used and a wireless fidelity (Wireless Fidelity, WIFI) system in which an unlicensed spectrum is used. In a 3GPP long term evolution (Long Term Evolution, LTE) system, an OFDM waveform is used for a downlink signal, and a single carrier frequency division multiplexing (Single Carrier-Frequency Division Multiplex Access, SC-FDMA) waveform is used for an uplink signal. However, in 5th generation (5 Generation, 5G) new radio (New Radio, NR), it is proposed that an architecture of an OFDM waveform is used for both an uplink waveform and a downlink waveform. In the institute of electrical and electronics engineers (Institute of Electrical and Electronics Engineers, IEEE) 802.11 series standards, the OFDM waveform starts to be used in IEEE 802.11a. The OFDM waveform is still used in subsequently evolved versions: IEEE 802.11n, IEEE 802.11ac, and IEEE 802.11ax.

With development of mobile communications technologies, a bandwidth requirement gradually increased. In an LTE evolution process, a research topic of licensed-assisted access (License Assistant Access, LAA) is proposed, and LAA is to assist access of an unlicensed carrier by using a licensed carrier. In a 3GPP system in which a licensed spectrum is used, a mechanism in which an unlicensed spectrum may be used is introduced. For an LAA technology and an enhanced LAA (Enhanced LAA, eLAA) technology in a spectrum below 6 GHz, an OFDM waveform and a system bandwidth of 20 MHz are used in both an LTE system and a WIFI system. An OFDM parameter in LTE continues to be used in the LAA technology and the eLAA (Enhanced LAA) technology in LTE, to be specific, a system bandwidth is 20 MHz, a subcarrier spacing is 15 kHz, and inverse Fourier transform (IFFT) has 2048 points. Such a design may enable a base station and a terminal to use a same baseband processing unit to reuse LTE software and hardware as much as possible, regardless of whether the base station and the terminal work on the licensed carrier or the unlicensed carrier.

To further improve a 5G peak rate, an available licensed spectrum range is further extended in a 5G standard. Not only a new frequency band below 6 GHz is introduced, but also a new licensed frequency band above 6 GHz is introduced. However, because of scarcity of a licensed spectrum, in a licensed frequency band, a maximum system bandwidth of only 400 MHz is used in NR. In addition to supporting a 15 kHz subcarrier spacing supported in LTE, an OFDM transmission parameter further supports the following five subcarrier spacings: 30 kHz, 60 kHz, 120 kHz, 240 kHz, and 480 kHz. A maximum quantity of supported IFFT points is currently extended to be at least 4096.

Similarly, in a 5G NR unlicensed (NR Unlicense, NR-U) topic, a mechanism in which an unlicensed spectrum is used is also expected to be introduced based on a 5G licensed spectrum. In addition, an unlicensed spectrum range is extended from original 5 GHz that is below 6 GHz and that is supported in LAA and eLAA to above 6 GHz, for example, 37 GHz and 60 GHz. Different from another frequency band, a system bandwidth of a device that already exists in 60 GHz, for example, an IEEE 802.11ad device, is 2.16 GHz. A single carrier waveform is mandatory, and an OFDM waveform is only an optional waveform. The single carrier waveform in IEEE 802.11ad means: Transmission parameters are that a sampling frequency is 1760 MHz, every 512 sampling points form one single carrier block, 64 sampling points in each single carrier block are reference signals, and remaining 448 sampling points are used to transmit data. The OFDM waveform in IEEE 802.11ad means: Transmission parameters are that a subcarrier spacing is 5.15625 MHz, a quantity of IFFT points is 512, a quantity of available subcarriers is 355, and the 355 subcarriers include 336 data subcarriers, 16 pilot subcarriers, and 3 direct current subcarriers.

If an NR-U device uses an unlicensed frequency band of 60 GHz and continues to use a parameter in the OFDM waveform in the 5G licensed spectrum, the 2.16 GHz bandwidth is divided into a plurality of bandwidths of 400 MHz or bandwidths below 400 MHz. Consequently, the IEEE 802.11ad device that performs energy detection of only the 2.16 GHz bandwidth cannot accurately obtain a spectrum occupation status or a spectrum idle status, and therefore use of a 60 GHz spectrum by an existing IEEE 802.11ad device is affected. If the NR-U device continues to use a single carrier parameter or an OFDM parameter in an unlicensed spectrum of 60 GHz, there is no relationship between the parameter and the OFDM parameter in the 5G licensed spectrum, and hardware or software in a 5G licensed frequency band cannot be reused.

Therefore, a waveform parameter needs to be provided in NR-U, so that not only a coexistence requirement of a 60 GHz frequency band is met, but also the hardware or software in the 5G licensed frequency band can be reused.

### SUMMARY

This application provides a signal sending method and a device, to reuse hardware or software in a 5G licensed frequency band while ensuring that a coexistence requirement of a 60 GHz frequency band is met.

According to a first aspect, a signal sending method is provided, including: generating, by a first device, at least one first signal based on an i^{th} set of parameters in a first parameter, where the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, and I ≥ i ≥ 1; sending, by the first device, the at least one first signal to a second device on an unlicensed carrier; generating, by the first device, at least one second signal based on a j^{th} set of parameters in a second parameter, where the second parameter includes J sets of parameters, the j^{th} set of parameters includes a subcarrier spacing N4ⱼ, a quantity N5ⱼ of available subcarriers, and a quantity N6ⱼ of IDFT points, and J ≥ j ≥ 1; and sending, by the first device, the at least one second signal to the second device on a licensed carrier, where N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

In a possible design, N1ᵢ = 15 x 2^{k} kHz, k is an integer greater than or equal to 4 and less than or equal to 8, and N3ᵢ is an integral power of 2; or N1ᵢ = 15 x 2^{k} kHz, k is an integer greater than or equal to 4 and less than or equal to 8, and N3ᵢ is a common multiple of 2 and 3; or N1ᵢ = 15 x 2^{k} kHz, k is an integer greater than or equal to 4 and less than or equal to 8, and N3ᵢ is a common multiple of 2 and 5.

It should be noted that in this application, based on the first signal generated by using the foregoing parameter, hardware and software requirements in a 5G licensed frequency band can be reused while it is ensured that a coexistence requirement of an unlicensed frequency band of 60 GHz is met.

In a possible design, the first device is a network device, and the second device is a terminal device; and before the sending, by the first device, the at least one first signal to a second device on an unlicensed carrier, the method further includes: sending, by the network device, first indication information to the terminal device on the licensed carrier or the unlicensed carrier, where the first indication information is used to indicate a granularity at which the terminal device receives the first signal on the unlicensed carrier.

It should be noted that in this application, a time-frequency resource scheduled by a terminal may not exceed a scheduling configuration granularity and an indication range in the licensed carrier, so that existing dynamic scheduling information and a hardware resource of the licensed carrier of the terminal are reused.

In a possible design, before the sending, by the first device, the at least one first signal to a second device on an unlicensed carrier, the method further includes: sending, by the network device, second indication information to the terminal device on the unlicensed carrier, where the second indication information is used to indicate a quantity Xᵢ of available subcarriers of the terminal device in frequency domain, and N1ᵢ x Xᵢ < 400 MHz.

In a possible design, the first device is the network device, and the second device is the terminal device; and before the sending, by the first device, the at least one first signal to a second device on an unlicensed carrier, the method further includes: receiving, by the network device, reporting information of the terminal device on the licensed carrier, where the reporting information carries a field indicating that the terminal device supports an unlicensed carrier capability, and the field indicating that the terminal device supports the unlicensed carrier capability includes at least one of a parameter indicating that the terminal device supports an unlicensed channel range, a parameter indicating that the terminal device supports a bandwidth sending capability, and a parameter indicating that the terminal device supports a bandwidth receiving capability; and the sending, by the first device, the at least one first signal to a second device on an unlicensed carrier includes: sending, by the network device, the at least one first signal to the terminal device on an unlicensed channel supported by the terminal device, where the unlicensed channel includes the unlicensed carrier, and a frequency domain range of the first signal is less than or equal to the bandwidth receiving capability supported by the terminal device.

It should be noted that in this application, a terminal device with a limited capability may also successfully perform communication by using an unlicensed spectrum, to improve utilization of the unlicensed spectrum.

In a possible design, the first device is the network device, the second device is the terminal device, when there are a plurality of first signals, the plurality of first signals include a discovery signal, the discovery signal includes a synchronization block signal SS-Block, and N2ᵢ is greater than or equal to 256; and the sending, by the first device, the at least one first signal to a second device on an unlicensed carrier includes: sending, by the network device, the SS-Block to the terminal device by using 256 subcarriers in the N2ᵢ available subcarrier centers in the unlicensed carrier.

In a possible design, the first device is the network device, the second device is the terminal device, when there are a plurality of first signals, the plurality of first signals include a discovery signal, the discovery signal includes an SS-Block, the N2ᵢ available subcarriers in the unlicensed carrier include at least one subband, and a quantity of subcarriers included in each subband is greater than or equal to 256; and the sending, by the first device, the at least one first signal to a second device on an unlicensed carrier includes: sending, by the network device, the SS-Block to the terminal device by using 256 subcarriers in each subband center.

In a possible design, the first device is the network device, the second device is the terminal device, the first signal includes a plurality of primary synchronization signals PSSs, secondary synchronization signals SSSs, and physical broadcast channels PBCHs, and the N2ᵢ available subcarriers in the unlicensed carrier include at least a first subband and a second subband; and
the sending, by the first device, the at least one first signal to a second device on an unlicensed carrier includes: sending, by the first device, the PSS, the SSS, and the PBCH in the first subband by using a first antenna array; and sending, by the first device, the PSS, the SSS, and the PBCH in the second subband by using a second antenna array, where the first antenna array is different from the second antenna array, and the first subband is different from the second subband.

In a possible design, the first device is the network device, the second device is the terminal device, and the first signal includes at least the PBCH; and the sending, by the first device, the at least one first signal to a second device on an unlicensed carrier includes: sending, by the network device, the PBCH to the terminal device on the unlicensed carrier, where the PBCH carries a first field, and the first field is a field that is not carried in a PBCH sent by the network device on the licensed carrier; or the first field is different from a second field, and the second field is a field that corresponds to the first field and that is carried in a PBCH sent by the network device on the licensed carrier.

In a possible design, the first device is the network device, the second device is the terminal device, and the first signal includes a scheduling signal; and
the sending, by the first device, the at least one first signal to a second device on an unlicensed carrier includes: sending, by the network device, the scheduling signal to a plurality of terminal devices on the unlicensed carrier, where the scheduling signal is used to indicate that a total bandwidth of uplink signals sent by the plurality of terminal devices on the unlicensed carrier is greater than or equal to 70% of 2.16 GHz; or the first device is the network device, the second device is the terminal device, and the second signal includes a scheduling signal; and
the sending, by the first device, the at least one second signal to the second device on a licensed carrier includes: sending, by the network device, the scheduling signal to a plurality of terminal devices on the licensed carrier, where the scheduling signal is used to indicate that a total bandwidth of uplink signals sent by the plurality of terminal devices on the unlicensed carrier is greater than or equal to 70% of 2.16 GHz.

In a possible design, after the sending, by the network device, the scheduling signal to a plurality of terminal devices, the method further includes: receiving, by the network device on the unlicensed carrier, a sixth signal sent by the terminal device, where a bandwidth of the sixth signal is greater than or equal to 70% of 2.16 GHz; and despreading, by the network device, the received sixth signal, to obtain a fifth signal, where a despreading factor of the despreading is W, the fifth signal occupies P contiguous available subcarriers, P is less than or equal to N2ᵢ/W, and both P and W are integers.

In a possible design, the first device is the terminal device, the second device is the network device, and the first signal includes an uplink beam training signal.

According to a second aspect, a signal receiving method is provided, including: receiving, by a second device on an unlicensed carrier, at least one first signal sent by a first device, where the first signal is generated based on an i^{th} set of parameters in a first parameter, the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, and I ≥ i ≥ 1; and receiving, by the second device on a licensed carrier, at least one second signal sent by the first device, where the second signal is generated based on a j^{th} set of parameters in a second parameter, the second parameter includes J sets of parameters, the j^{th} set of parameters includes a subcarrier spacing N4ⱼ, a quantity N5ⱼ of available subcarriers, and a quantity N6ⱼ of IDFT points, J ≥ j ≥ 1, N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

In a possible design, N1ᵢ = 15 x 2^{k} kHz, k is an integer greater than or equal to 4 and less than or equal to 8, and N3ᵢ is an integral power of 2; or N1ᵢ = 15 x 2^{k} kHz, k is an integer greater than or equal to 4 and less than or equal to 8, and N3ᵢ is a common multiple of 2 and 3; or N1ᵢ = 15 x 2^{k} kHz, k is an integer greater than or equal to 4 and less than or equal to 8, and N3ᵢ is a common multiple of 2 and 5.

In a possible design, the first device is a network device, and the second device is a terminal device. Before the receiving, by a second device on an unlicensed carrier, at least one first signal sent by a first device, the method further includes: receiving, by the terminal device on the licensed carrier or the unlicensed carrier, first indication information sent by the network device, where the first indication information is used to indicate a granularity at which the terminal device receives the first signal on the unlicensed carrier, a spacing between adjacent granularities is 1/2^{k4} ms, the spacing between adjacent granularities includes 12 x 2^{k5} OFDM symbols, and k4 x k5 = k, or a spacing between adjacent granularities is 1/2^{k2} ms, the spacing between adjacent granularities includes 14 x 2^{k3} OFDM symbols, and k2 x k3 = k; and the receiving, by a terminal device on an unlicensed carrier, at least one first signal sent by the terminal device includes: receiving, by the terminal device, the first signal on the unlicensed carrier based on the granularity indicated by the first indication information.

In a possible design, the first device is the network device, and the second device is the terminal device. Before the receiving, by a second device on an unlicensed carrier, at least one first signal sent by a first device, the method further includes: receiving, by the terminal device on the unlicensed carrier, second indication information sent by the network device, where the second indication information is used to indicate a quantity Xᵢ of available subcarriers of the terminal device in frequency domain, and N1ᵢ x Xᵢ < 400 MHz.

In a possible design, the first device is the network device, and the second device is the terminal device. Before the receiving, by a second device on an unlicensed carrier, at least one first signal sent by a first device, the method further includes: sending, by the terminal device, reporting information on the licensed carrier, where the reporting information carries at least one of a parameter indicating that the terminal device supports an unlicensed channel range, a parameter indicating that the terminal device supports a bandwidth sending capability, and a parameter indicating that the terminal device supports a bandwidth receiving capability; and the receiving, by a second device on an unlicensed carrier, at least one first signal sent by a first device includes: receiving, by the terminal device on a supported unlicensed channel, the at least one first signal sent by the first device, where the unlicensed channel includes the unlicensed carrier, and a frequency domain range of the second signal is less than or equal to the bandwidth receiving capability supported by the terminal device.

In a possible design, the first device is the network device, the second device is the terminal device, when there are a plurality of first signals, the plurality of first signals include a discovery signal, the discovery signal includes a synchronization block signal SS-Block, and N2ᵢ is greater than or equal to 256; and the receiving, by a second device on an unlicensed carrier, at least one first signal sent by a first device includes: receiving, by the terminal device by using 256 subcarriers in the N2ᵢ available subcarrier centers in the unlicensed carrier, the SS-Block sent by the first device.

In a possible design, the first device is the network device, the second device is the terminal device, when there are a plurality of first signals, the plurality of first signals include a discovery signal, the discovery signal includes an SS-Block, the N2ᵢ available subcarriers in the unlicensed carrier include at least one subband, and a quantity of subcarriers included in each subband is greater than or equal to 256; and the receiving, by a second device on an unlicensed carrier, at least one first signal sent by a first device includes: receiving, by the terminal device by using 256 subcarriers in each subband center, the SS-Block sent by network device.

In a possible design, the first device is the network device, the second device is the terminal device, and the first signal includes at least the physical broadcast channel PBCH; and the receiving, by a second device on an unlicensed carrier, at least one first signal sent by a first device includes: receiving, by the terminal device on the unlicensed carrier, the PBCH sent by the network device, where the PBCH carries a first field, and the first field is a field that is not carried in a PBCH sent by the network device on the licensed carrier; or the first field is different from a second field, and the second field is a field that corresponds to the first field and that is carried in a PBCH sent by the network device on the licensed carrier.

In a possible design, the first device is the network device, the second device is the terminal device, and the first signal includes a scheduling signal. The receiving, by a second device on an unlicensed carrier, at least one first signal sent by a first device includes: receiving, by the terminal device on the unlicensed carrier, the scheduling signal sent by the network device, where the scheduling signal is used to indicate that a total bandwidth of uplink signals sent by the plurality of terminal devices on the unlicensed carrier is greater than or equal to 70% of 2.16 GHz; or the first device is the network device, the second device is the terminal device, and the second signal includes a scheduling signal; and the receiving, by the second device on a licensed carrier, at least one second signal sent by the first device includes: receiving, by the terminal device on the licensed carrier, the scheduling signal sent by the network device, where the scheduling signal is used to indicate that a total bandwidth of uplink signals sent by the plurality of terminal devices on the unlicensed carrier is greater than or equal to 70% of 2.16 GHz.

In a possible design, the method further includes: obtaining a fifth signal after the terminal device receives the scheduling signal, where the fifth signal occupies P contiguous available subcarriers; directly spreading, by the terminal device, the fifth signal to obtain a sixth signal, where a spreading factor of the direct spreading is W, a bandwidth of the sixth signal is greater than or equal to 70% of 2.16 GHz, P is less than or equal to N2i/W, and both P and W are integers; and sending, by the terminal device, the sixth signal to the network device on the unlicensed carrier.

In a possible design, after the terminal device sends the sixth signal to the terminal device on the unlicensed carrier, the method further includes: sending, by the terminal device, a subband signal on at least one subband on which the scheduling signal is scheduled, where a bandwidth of the subband signal is less than 70% of 2.16 GHz.

In a possible design, the sending, by the terminal device, a subband signal on at least one subband on which the scheduling signal is scheduled includes: detecting, by the terminal device, whether a subband signal scheduled by the scheduling signal is idle; and when the subband is idle, sending, by the terminal device, the subband signal to the network device on the subband.

In a possible design, the first device is the terminal device, the second device is the network device, and the first signal includes an uplink beam training signal.

According to a third aspect, a first device is provided, including: a processor, configured to generate at least one first signal based on an i^{th} set of parameters in a first parameter, where the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, and I ≥ i ≥ 1; and a transceiver, configured to send the at least one first signal to a second device on an unlicensed carrier, where the processor is further configured to generate at least one second signal based on a j^{th} set of parameters in a second parameter, where the second parameter includes J sets of parameters, the j^{th} set of parameters includes a subcarrier spacing N4ⱼ, a quantity N5ⱼ of available subcarriers, and a quantity N6ⱼ of IDFT points, and J ≥ j ≥ 1; and the transceiver is further configured to send the at least one second signal to the second device on a licensed carrier, where N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

In a possible design, N1ᵢ = 15 x 2^{k} kHz, k is an integer greater than or equal to 4 and less than or equal to 8, and N3ᵢ is an integral power of 2; or N1ᵢ = 15 x 2^{k} kHz, k is an integer greater than or equal to 4 and less than or equal to 8, and N3ᵢ is a common multiple of 2 and 3; or N1ᵢ = 15 x 2^{k} kHz, k is an integer greater than or equal to 4 and less than or equal to 8, and N3ᵢ is a common multiple of 2 and 5.

In a possible design, the first device is a network device, and the second device is a terminal device; and the transceiver is further configured to send first indication information to the terminal device on the licensed carrier or the unlicensed carrier, where the first indication information is used to indicate a granularity at which the terminal device receives the first signal on the unlicensed carrier.

In a possible design, the transceiver is further configured to send second indication information to the terminal device on the unlicensed carrier, where the second indication information is used to indicate a quantity Xᵢ of available subcarriers of the terminal device in frequency domain, and N1ᵢ x Xᵢ < 400 MHz.

In a possible design, the first device is the network device, and the second device is the terminal device; the transceiver is further configured to receive reporting information of the terminal device on the licensed carrier, where the reporting information carries a field indicating that the terminal device supports an unlicensed carrier capability, and the field indicating that the terminal device supports the unlicensed carrier capability includes at least one of a parameter indicating that the terminal device supports an unlicensed channel range, a parameter indicating that the terminal device supports a bandwidth sending capability, and a parameter indicating that the terminal device supports a bandwidth receiving capability; and when sending the at least one first signal to the second device on the unlicensed carrier, the transceiver is specifically configured to: send the at least one first signal to the terminal device on an unlicensed channel supported by the terminal device, where the unlicensed channel includes the unlicensed carrier, and a frequency domain range of the first signal is less than or equal to the bandwidth receiving capability supported by the terminal device.

In a possible design, the first device is the network device, the second device is the terminal device, when there are a plurality of first signals, the plurality of first signals include a discovery signal, the discovery signal includes a synchronization block signal SS-Block, and N2ᵢ is greater than or equal to 256; and when sending the at least one first signal to the second device on the unlicensed carrier, the transceiver is specifically configured to send the SS-Block to the terminal device by using 256 subcarriers in the N2ᵢ available subcarrier centers in the unlicensed carrier.

In a possible design, the first device is the network device, the second device is the terminal device, when there are a plurality of first signals, the plurality of first signals include a discovery signal, the discovery signal includes an SS-Block, the N2ᵢ available subcarriers in the unlicensed carrier include at least one subband, and a quantity of subcarriers included in each subband is greater than or equal to 256; and when sending the at least one first signal to the second device on the unlicensed carrier, the transceiver is specifically configured to send the SS-Block to the terminal device by using 256 subcarriers in each subband center.

In a possible design, the first device is the network device, the second device is the terminal device, the first signal includes a plurality of primary synchronization signals PSSs, secondary synchronization signals SSSs, and physical broadcast channels PBCHs, and the N2ᵢ available subcarriers in the unlicensed carrier include at least a first subband and a second subband; and when sending the at least one first signal to the second device on the unlicensed carrier, the transceiver is specifically configured to: send the PSS, the SSS, and the PBCH in the first subband by using a first antenna array; and send the PSS, the SSS, and the PBCH in the second subband by using a second antenna array, where the first antenna array is different from the second antenna array, and the first subband is different from the second subband.

In a possible design, the first device is the network device, the second device is the terminal device, and the first signal includes at least the PBCH; and when sending the at least one first signal to the second device on the unlicensed carrier, the transceiver is specifically configured to: send the PBCH to the terminal device on the unlicensed carrier, where the PBCH carries a first field, and the first field is a field that is not carried in a PBCH sent by the network device on the licensed carrier; or the first field is different from a second field, and the second field is a field that corresponds to the first field and that is carried in a PBCH sent by the network device on the licensed carrier.

In a possible design, the first device is the network device, the second device is the terminal device, and the first signal includes a scheduling signal; and when sending the at least one first signal to the second device on the unlicensed carrier, the transceiver is specifically configured to: send the scheduling signal to a plurality of terminal devices on the unlicensed carrier, where the scheduling signal is used to indicate that a total bandwidth of uplink signals sent by the plurality of terminal devices on the unlicensed carrier is greater than or equal to 70% of 2.16 GHz; or the first device is the network device, the second device is the terminal device, and the second signal includes a scheduling signal; and when sending the at least one second signal to the second device on the licensed carrier, the transceiver is specifically configured to: send the scheduling signal to a plurality of terminal devices on the licensed carrier, where the scheduling signal is used to indicate that a total bandwidth of uplink signals sent by the plurality of terminal devices on the unlicensed carrier is greater than or equal to 70% of 2.16 GHz.

In a possible design, the transceiver is further configured to receive, on the unlicensed carrier, a sixth signal sent by the terminal device, where a bandwidth of the sixth signal is greater than or equal to 70% of 2.16 GHz; and the processor is further configured to despread the received sixth signal, to obtain a fifth signal, where a despreading factor of the despreading is W, the fifth signal occupies P contiguous available subcarriers, P is less than or equal to N2ᵢ/W, and both P and W are integers.

In a possible design, the first device is the terminal device, the second device is the network device, and the first signal includes an uplink beam training signal.

According to a fourth aspect, a second device is provided, including: a transceiver, configured to receive, on an unlicensed carrier, at least one first signal sent by a first device, where the first signal is generated based on an i^{th} set of parameters in a first parameter, the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, and I ≥ i ≥ 1, where the transceiver is further configured receive, on a licensed carrier, at least one second signal sent by the first device, where the second signal is generated based on a j^{th} set of parameters in a second parameter, the second parameter includes J sets of parameters, the j^{th} set of parameters includes a subcarrier spacing N4ⱼ, a quantity N5ⱼ of available subcarriers, and a quantity N6ⱼ of IDFT points, J ≥ j ≥ 1, N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ); and a processor, configured to process the first signal and the second signal.

In a possible design, N1ᵢ = 15 x 2^{k} kHz, k is an integer greater than or equal to 4 and less than or equal to 8, and N3ᵢ is an integral power of 2; or N1ᵢ = 15 x 2^{k} kHz, k is an integer greater than or equal to 4 and less than or equal to 8, and N3ᵢ is a common multiple of 2 and 3; or N1ᵢ = 15 x 2^{k} kHz, k is an integer greater than or equal to 4 and less than or equal to 8, and N3ᵢ is a common multiple of 2 and 5.

In a possible design, the first device is a network device, and the second device is a terminal device. The transceiver is further configured to receive, on the licensed carrier or unlicensed carrier, first indication information sent by the network device, where the first indication information is used to indicate a granularity at which the terminal device receives the first signal on the unlicensed carrier, a spacing between adjacent granularities is 1/2^{k4} ms, the spacing between adjacent granularities includes 12 x 2^{k5} OFDM symbols, and k4 x k5 = k, or a spacing between adjacent granularities is 1/2^{k2} ms, the spacing between adjacent granularities includes 14 x 2^{k3} OFDM symbols, and k2 x k3 = k. When receiving, on the unlicensed carrier, the at least one first signal sent by the terminal device, the transceiver is specifically configured to: receive the first signal on the unlicensed carrier based on the granularity indicated by the first indication information.

In a possible design, the first device is the network device, and the second device is the terminal device. The transceiver is further configured to receive, on the unlicensed carrier, second indication information sent by the network device, where the second indication information is used to indicate a quantity Xᵢ of available subcarriers of the terminal device in frequency domain, and N1ᵢ x Xᵢ < 400 MHz.

In a possible design, the first device is the network device, and the second device is the terminal device. The transceiver is further configured to send reporting information on the licensed carrier, where the reporting information carries at least one of a parameter indicating that the terminal device supports an unlicensed channel range, a parameter indicating that the terminal device supports a bandwidth sending capability, and a parameter indicating that the terminal device supports a bandwidth receiving capability. When receiving, on the unlicensed carrier, the at least one first signal sent by the first device, the transceiver is specifically configured to receive, on a supported unlicensed channel, the at least one first signal sent by the first device, where the unlicensed channel includes the unlicensed carrier, and a frequency domain range of the second signal is less than or equal to the bandwidth receiving capability supported by the terminal device.

In a possible design, the first device is the network device, the second device is the terminal device, when there are a plurality of first signals, the plurality of first signals include a discovery signal, the discovery signal includes a synchronization block signal SS-Block, and N2ᵢ is greater than or equal to 256; and when receiving, on the unlicensed carrier, the at least one first signal sent by the first device, the transceiver is specifically configured to receive, by using 256 subcarriers in the N2ᵢ available subcarrier centers in the unlicensed carrier, the SS-Block sent by the first device.

In a possible design, the first device is the network device, the second device is the terminal device, when there are a plurality of first signals, the plurality of first signals include a discovery signal, the discovery signal includes an SS-Block, the N2ᵢ available subcarriers in the unlicensed carrier include at least one subband, and a quantity of subcarriers included in each subband is greater than or equal to 256; and when receiving, on the unlicensed carrier, the at least one first signal sent by the first device, the transceiver is specifically configured to receive, by using 256 subcarriers in each subband center, the SS-Block sent by the network device.

In a possible design, the first device is the network device, the second device is the terminal device, and the first signal includes at least a physical broadcast channel PBCH. When receiving, on the unlicensed carrier, the at least one first signal sent by the first device, the transceiver is specifically configured to receive, on the unlicensed carrier, the PBCH sent by the network device, where the PBCH carries a first field, and the first field is a field that is not carried in a PBCH sent by the network device on the licensed carrier; or the first field is different from a second field, and the second field is a field that corresponds to the first field and that is carried in a PBCH sent by the network device on the licensed carrier.

In a possible design, the first device is the network device, the second device is the terminal device, and the first signal includes a scheduling signal. When receiving, on the unlicensed carrier, the at least one first signal sent by the first device, the transceiver is specifically configured to receive, on the unlicensed carrier, the scheduling signal sent by the network device, where the scheduling signal is used to indicate that a total bandwidth of uplink signals sent by the plurality of terminal devices on the unlicensed carrier is greater than or equal to 70% of 2.16 GHz. Alternatively, the first device is the network device, the second device is the terminal device, and the second signal includes a scheduling signal.

When receiving, on the licensed carrier, the at least one second signal sent by the first device, the transceiver is specifically configured to receive, on the licensed carrier, the scheduling signal sent by the network device, where the scheduling signal is used to indicate that a total bandwidth of uplink signals sent by a plurality of terminal devices on the unlicensed carrier is greater than or equal to 70% of 2.16 GHz.

In a possible design, the device further includes: the processor, configured to obtain a fifth signal after the scheduling signal is received, where the fifth signal occupies P contiguous available subcarriers. The processor is further configured to directly spread the fifth signal to obtain a sixth signal, where a spreading factor of the direct spreading is W, a bandwidth of the sixth signal is greater than or equal to 70% of 2.16 GHz, P is less than or equal to N2i/W, and both P and W are integers. The transceiver is further configured to send the sixth signal to the network device on the unlicensed carrier.

In a possible design, after the terminal device sends the sixth signal to the terminal device on the unlicensed carrier, the transceiver is further configured to send a subband signal on at least one subband on which the scheduling signal is scheduled, where a bandwidth of the subband signal is less than 70% of 2.16 GHz.

In a possible design, the processor is further configured to detect whether a subband signal scheduled by the scheduling signal is idle. The transceiver is further configured to: when the subband is idle, send the subband signal to the network device on the subband.

In a possible design, the first device is the terminal device, the second device is the network device, and the first signal includes an uplink beam training signal.

According to a fifth aspect, a computer readable storage medium is further provided, including an instruction. When the instruction is run on a computer, the computer is enabled to perform the method according to any one of the foregoing aspects.

According to a sixth aspect, a chip is provided. The chip includes an input interface, an output interface, at least one processor, and at least one memory, the at least one memory is configured to store code, the at least one processor is configured to execute the code in the memory, and when the code is executed, the processor implements the method according to any one the foregoing aspects.

According to a seventh aspect, a communications system is provided. The communications system includes the first device in any one of the foregoing third aspect and the possible designs of the third aspect and the second device in any one of the foregoing fourth aspect and the possible designs of the fourth aspect.

Because there are a plurality of systems in the unlicensed spectrum, such as a WIFI system and an NR system, for coexistence between different systems, a channel access mechanism of listen before talk is used for a sending node, to be specific, before transmitting information, the sending node first listens for a channel, and then occupies the channel to send information after detecting that the channel is idle. However, in this application, because the first signal sent on the unlicensed carrier meets the following: N1ᵢ x N3ᵢ is greater than or equal to 1.512 GHz, another system operating on the unlicensed spectrum, such as the WIFI system, detects the first signal, and therefore no longer occupies the unlicensed channel to send the information, to meet the coexistence requirement of the 60 GHz frequency band. In addition, in this application, the first signal further meets the following: max(N1ᵢ) ≥ max(N4ⱼ), and max(N3ᵢ) ≤ max(N6ⱼ). It can be learned that the quantity N3i of IDFT points of the first signal is less than a maximum quantity N6ⱼ of IDFT points supported in a licensed spectrum. In this case, the hardware or software in the existing 5G licensed frequency band may be reused to generate the first signal, to reduce overall complexity.

### BRIEF DESCRIPTION OF DRAWINGS

FIG. 1 is an architectural diagram of a system according to this application;
FIG. 2 is a flowchart of a signal sending method according to this application;
FIG. 3a is an architectural diagram of sending a first signal according to this application;
FIG. 3b is an architectural diagram of receiving a first signal according to this application;
FIG. 4 to FIG. 10 are flowcharts of a signal sending method according to this application;
FIG. 11 is a schematic diagram of an OFDM signal according to this application;
FIG. 12 is a schematic structural diagram of a first device according to this application;
FIG. 13 is a schematic structural diagram of a second device according to this application;
FIG. 14 is a schematic structural diagram of a base station according to this application; and
FIG. 15 is a schematic structural diagram of a terminal device according to this application.

### DESCRIPTION OF EMBODIMENTS

For ease of understanding, descriptions of related concepts in this application are provided as examples for reference. Details are as follows:
A base station (base station, BS) device may also be referred to as a base station, and is an apparatus that is deployed in a radio access network to provide a wireless communication function. For example, devices that provide a base station function in a 2G network include a wireless base transceiver station (base transceiver station, BTS) and a base station controller (base station controller, BSC); devices that provide a base station function in a 3G network include a NodeB (NodeB) and a radio network controller (radio network controller, RNC); a device that provides a base station function in a 4G network includes an evolved NodeB (evolved NodeB, eNB); and a device that provides a base station function in a WLAN is an access point (access point, AP). In a future 5G network such as new radio (New Radio, NR) or LTE+, a device that provides a base station function includes a continuously evolved NodeB (gNB), a TRP (transmission and reception point, transmission and reception point), or a TP (transmission point, transmission point). The TRP or the TP may not include a baseband part, and include only a radio frequency part; or may include a baseband part and a radio frequency part.

A terminal device is user equipment (user equipment, UE), and may be a movable terminal device, or an immovable terminal device. The device is mainly configured to receive or send service data. The user equipment may be distributed in a network. The user equipment has different names in different networks, such as a terminal, a mobile console, a subscriber unit, a station, a cellular phone, a personal digital assistant, a wireless modem, a wireless communications device, a handheld device, a laptop computer, a cordless telephone set, a wireless local loop station, or a vehicle-mounted device. The user equipment may communicate with one or more core networks by using a radio access network (radio access network, RAN) (an access part of a wireless communications network). For example, the user equipment exchanges a voice and/or data with the radio access network.

A network side device is a device located on a network side in a wireless communications network, and may be an access network network element, such as a base station or a controller (if existent), or may be a core network network element, or may be another network element.

The following describes the technical solutions of this application with reference to the accompanying drawings:

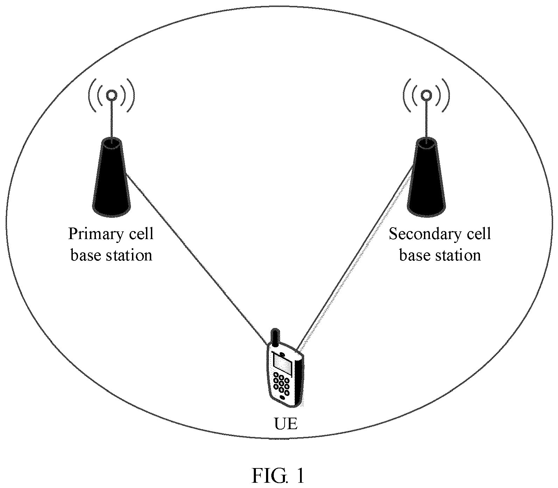

FIG. 1 is a schematic diagram of a possible system network according to this application. As shown in FIG. 1, terminal UE is located in coverage areas of a primary cell (primary cell, Pcell) base station and a secondary cell (secondary cell, Scell) base station. The Pcell base station works on a licensed frequency band, the Scell base station works on an unlicensed frequency band, and ideal backhaul is performed between the Pcell base station and the Scell base station.

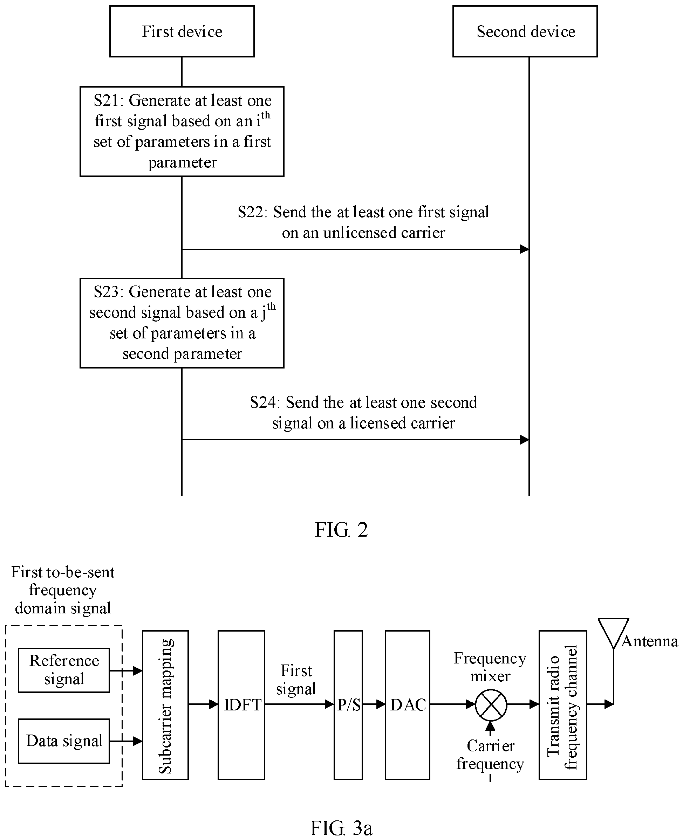

Based on the foregoing application scenario, as shown in FIG. 2, this application provides a procedure of a signal sending method. The procedure may be specifically applied to the following: A Pcell base station and/or a Scell base station send/sends a signal to a terminal. A first device in the procedure corresponds to the Pcell base station or the Scell base station in FIG. 1, and the second device corresponds to the UE in FIG. 1. As shown in FIG. 2, the procedure specifically includes the following steps.

Step S21: The first device generates at least one first signal based on an i^{th} set of parameters in a first parameter.

In this application, the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, Xᵢ subcarriers are occupied in N1ᵢ available subcarriers, and I ≥ i ≥ 1. The first signal may be an orthogonal frequency division multiplexing (orthogonal frequency division multiplex, OFDM) signal.

In this application, a process of generating the first signal based on the i^{th} set of parameters in the first parameter may be specifically as follows: obtaining a first to-be-sent frequency domain signal, where the first to-be-sent frequency domain signal may be specifically a data signal or a reference signal; mapping the first to-be-sent frequency domain signal to the Xᵢ subcarriers to obtain a first mapping signal; and performing, on the first mapping signal, IDFT with N3ᵢ points to obtain the first signal.

More specifically, as shown in FIG. 3a, a process of sending a first signal may be specifically as follows: obtaining a first to-be-sent frequency domain signal, where the first to-be-sent frequency domain signal may be specifically a reference signal or a data signal; sequentially performing subcarrier mapping and IDFT transform on the first to-be-sent frequency domain signal to obtain the first signal; and then performing parallel/serial (P/S) conversion, digital-to-analog conversion (DAC), and frequency mixer processing on the first signal, and sending the first signal to a second device through a transmit radio frequency channel.

Step S22: The first device sends the at least one first signal to the second device on an unlicensed carrier.

In this application, the unlicensed carrier may be specifically a carrier in an unlicensed frequency band of 60 GHz, and a center frequency is separately one or more of 58.32 GHz, 60.48 GHz, 62.64 GHz, 64.8 GHz, 66.96 GHz, 69.12 GHz, and 71.28 GHz. A bandwidth of a channel corresponding to the unlicensed carrier may be 2.16 GHz, for example, may be separately 57.24 GHz to 59.4 GHz, 59.4 GHz to 61.56 GHz, 61.56 GHz to 63.72 GHz, 63.72 GHz to 65.88 GHz, 65.88 GHz to 68.04 GHz, 68.04 GHz to 70.2 GHz, and 70.2 GHz to 72.36 GHz.

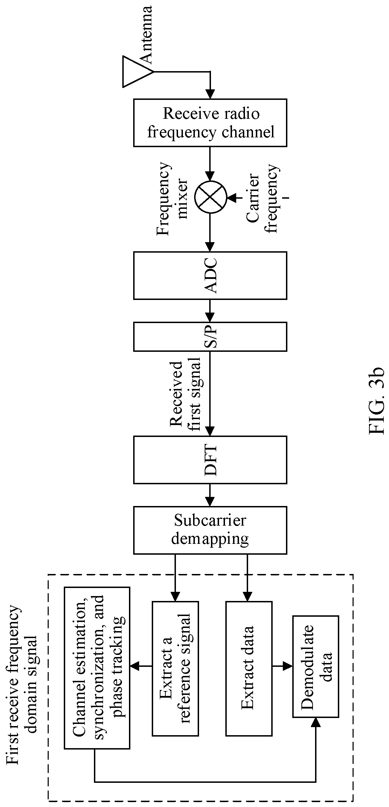

In this application, as shown in FIG. 3b, a second device may obtain a received first signal through processing of an antenna, a receive radio frequency channel, a frequency mixer, analog-to-digital conversion (ADC), serial/parallel (S/P) conversion, and the like, and then perform DFT and subcarrier mapping processing on the received first signal to obtain a first receive frequency domain signal. It may be understood that the received first signal in FIG. 3b is a signal obtained after the sent first signal shown in FIG. 3a passes through a radio channel, and is superposed with noise. In this application, still referring to FIG. 3b, if the signal is the reference signal in a corresponding subcarrier, the received reference signal in the corresponding subcarrier needs to be extracted through demapping, and a channel estimation operation, a synchronization operation, and a phase tracking operation are performed based on the reference signal. Similarly, if the signal is the data signal in the corresponding subcarrier, the data signal in the corresponding subcarrier may be extracted through demapping, and the data signal is finally obtained based on a channel estimation parameter, a synchronization parameter, a phase tracking parameter, and demodulation data that are obtained by using the reference signal. It may be understood that, in addition to the foregoing zero intermediate frequency structure, a receiver may use a superheterodyne structure, to be specific, two frequency mixers exist, and an intermediate frequency channel exists between the two frequency mixers.

Step S23: The first device generates at least one second signal based on a j^{th} set of parameters in a second parameter.

In this application, the second parameter includes J sets of parameters, the j^{th} set of parameters includes a subcarrier spacing N4ⱼ, a quantity N5ⱼ of available subcarriers, and a quantity N6ⱼ of IDFT points, Yⱼ subcarriers are occupied in the N5ⱼ available subcarriers, and J ≥ j ≥ 1. The second signal may be an OFDM signal.

In this application, a process of generating the second signal based on the j^{th} set of parameters in the second parameter may be specifically as follows: obtaining a second to-be-sent frequency domain signal, where the second to-be-sent frequency domain signal may be specifically a data signal or a reference signal; mapping the second to-be-sent frequency domain signal to the Yⱼ subcarriers to obtain a second mapping signal; and performing, on the second mapping signal, IDFT with N6ⱼ points to obtain the second signal. The process of generating the second signal by the first device is similar to the process of generating the first signal by the first device. Details are not described herein again.

Step S24: The first device sends the at least one second signal to the second device on a licensed carrier.

A process of processing the second signal by the first device is similar to a process of processing the first signal by the first device. Details are not described herein again.

In this application, the licensed carrier may specifically include a licensed carrier frequency above or below 6 GHz, and the center frequency is determined based on a frequency that is issued by the international telecommunication union (International Telecommunication Union, ITU) and that is used for global mobile communication. An OFDM parameter of the second signal includes parameters specified in LTE, to be specific, a subcarrier spacing is 7.5 kHz, and a quantity of IFFT points is 4096; and a subcarrier spacing is 15 kHz, and a quantity of IFFT points is 2048, and a transmission parameter indicating that a maximum transmission bandwidth in NR in the licensed spectrum does not exceed 400 MHz. Currently-used parameters include two sets of parameters in a frequency band below 6 GHz and four sets of parameters in a frequency band above 6 GHz. The two sets of parameters in the frequency band below 6 GHz are specifically as follows: A subcarrier spacing is 30 kHz, and a quantity of IFFT points is 1024; and a subcarrier spacing is 60 KH, and a quantity of IFFT points is 512. The four sets of parameters in the frequency band above 6 GHz are specifically as follows: A subcarrier spacing is 60 kHz, and a quantity of IFFT points is 4096; a subcarrier spacing is 120 kHz, and a quantity of IFFT points is 4096; a subcarrier spacing is 240 kHz, and a quantity of IFFT points is 4096; and a subcarrier spacing is 480 kHz, and a quantity of IFFT points is 4096.

It should be noted that, N1ᵢ, N2ᵢ, N3i, N4ⱼ, N5ⱼ, N6ⱼ, Xᵢ, Yⱼ, I, and J are all integers. In this application, the unlicensed system channel bandwidth may be 2.16 GHz. Therefore, N1ᵢ x N3ᵢ may be specifically greater than or equal to 1.512 GHz, where 1.512 GHz = 70% x 2.16 GHz, max (N1ᵢ) ≥ max (N4ⱼ), and max (N3ᵢ) ≤ max (N6ⱼ).

In this application, to enable an NR-U device to coexist with an IEEE 802.11ad device, a waveform of the NR-U device is kept close to a bandwidth occupied by the IEEE 802.11ad device. A bandwidth occupied by an IEEE 802.11ad single-carrier waveform device is 1.760 GHz, and a bandwidth occupied by an OFDM waveform device is 5.15626 x 355 = 1.8734723 GHz.

In addition, in the IEEE 802.11ay standard that is being formulated, a plurality of 2.16 GHz channel bonding (Channel Bonding, CB) transmission modes are introduced, and an IEEE 802.11ay device is allowed to occupy one to four contiguous 2.16 GHz channels in seven contiguous 2.16 GHz channels whose center frequencies are respectively 58.32 GHz, 60.48 GHz, 62.64 GHz, 64.8 GHz, 66.96 GHz, 69.12 GHz, and 71.28 GHz, that is, six channels with a bandwidth of 2.16 GHz: 57.24 GHz to 59.4 GHz, 59.4 GHz to 61.56 GHz, 61.56 GHz to 63.72 GHz, 63.72 GHz to 65.88 GHz, 65.88 GHz to 68.04 GHz, and 68.04 GHz to 70.2 GHz; five channels with a bandwidth of 4.32 GHz: 57.24 GHz to 61.56 GHz, 61.56 GHz to 65.88 GHz, 65.88 GHz to 70.2 GHz, 59.4 GHz to 63.72 GHz, and 63.72 GHz to 68.04 GHz; four channels with a bandwidth of 6.48 GHz: 57.24 GHz to 63.72 GHz, 61.56 GHz to 70.2 GHz, 59.4 GHz to 65.88 GHz, and 63.72 GHz to 70.2 GHz; and three channels with a bandwidth of 8.64 GHz: 57.24 GHz to 65.88 GHz, 59.4 GHz to 68.04 GHz, and 61.56 GHz to 70.2 GHz. Considering spectrum efficiency of the NR-U device, the NR-U device should be enabled to support scalability similar to that of the IEEE 802.11ay device.

An NR-U parameter needs to be reused as a parameter of the NR-U device in the licensed frequency band as much as possible, so that the NR-U device can reuse hardware or software of the NR-U device in the licensed frequency band in a frequency band of 60 GHz. To be specific, the NR-U device is in an OFDM waveform in the licensed frequency band, and a subcarrier spacing meets the following: N4j = 15 x 2k1 kHz, where k1 may be an integer greater than or equal to 1 and less than or equal to 5, and N6j is less than or equal to a maximum size of FFT used in the licensed spectrum, for example, N6j may be less than 4096 or 8192, and N4j x N5j is less than or equal to 400 MHz. The NR-U uses the OFDM waveform in the unlicensed frequency band of 60 GHz, so that a generation module of an OFDM baseband signal can be reused.

In this application, generation of an OFDM baseband signal may include at least the following processes:
1. Obtain a value on a valid subcarrier of each OFDM symbol. In a communications system, a value on a valid subcarrier of each OFDM symbol may include two types: coded and modulated data, or a modulated reference signal. OFDM may have only a reference signal or only data, or both a reference signal and a data signal.
   Common modulation methods include π/2 BPSK, QPSK, 64QAM, 256QAM, and some non-uniform constellation modulation. Common code includes RS code, turbo code, LDPC code, and polar code.
2. Map a value on a valid subcarrier of each OFDM symbol to a valid subcarrier range.
3. Fill 0 in a subcarrier outside the valid subcarrier range within an IDFT point quantity range.
4. Convert a frequency domain signal on -Nfft/2 to Nfft/2 subcarriers into a time domain signal.

In an actual system, quick operation is implemented by using the IDFT in a process of converting the frequency domain signal to the time domain signal in step 4. When the IDFT is an integral power of 2, a fast algorithm of Radix-2 may be used. Similarly, a fast algorithm of Radix-4 may be used when the IDFT is an integral power of 4. In the LTE, when SC-FDMA is introduced in uplink, transmit signals with a quantity that is of DFT points and that can be decomposed into integral powers of 2, 3, and 5 are used, and a receive end uses receive signals with a corresponding quantity of IDFT points. Therefore, a quantity of OFDM waveform points used by the NR-U in the unlicensed carrier does not exceed parameters in an LTE and NR design range, and an IDFT module can be greatly reused.

To enable the NR-U device, the IEEE 802.11ad device, and the IEEE 802.11ay device to coexist in the 60 GHz band, in the NR-U device and the IEEE 802.11ad device, N1ᵢ x N3ᵢ is greater than or equal to 70% x 2.16 GHz = 1.512 GHz or N1ᵢ x N2ᵢ is close to 1.760 GHz. If the NR-U device has transmission bandwidth similar to that of the IEEE 802.11ay device, the following needs to be met: N1ᵢ x N3ᵢ is greater than or equal to 70% x 2.16 x Ncb GHz = 1.512 x Ncb GHz. Ncb represents a quantity of 2.16 GHz channels used for continuous transmission or N1ᵢ x N2ᵢ is close to a sampling rate of 1.760 x Ncb GHz. This is suitable to access a wider idle channel when a plurality of contiguous idle 2.16 GHz channels are detected.

A value of N3ᵢ is directly related to complexity of implementing the IDFT or the DFT. To ensure that implementation complexity of the licensed carrier and the unlicensed carrier is not significantly different, the following should be met: max(N3ᵢ) ≤ max(N6ⱼ).

It may be learned that N1ᵢ x N3ᵢ and N4ⱼ x N6ⱼ respectively represent a sampling rate of the unlicensed carrier and a sampling rate of the licensed carrier, and therefore, ADC and DAC clock frequency used in the licensed carrier and the unlicensed carrier in a transceiver apparatus is determined. When N1ᵢ * N3ᵢ/N4ⱼ * N6ⱼ is an integer, the licensed carrier and the unlicensed carrier may use a same primary crystal oscillator. In this case, same primary crystal oscillator frequency may be used when a signal is sent in the licensed frequency band and a signal is sent on the unlicensed frequency band, so that complexity that different clocks need to be maintained is reduced.

It should be noted that, in this application, a sequence of performing step S21 to step S24 is not limited. For example, in this application, step S21 and step S22 may be first performed to generate the first signal, and the first signal is sent on the licensed carrier, or the second signal may be generated first, and the second signal is sent on the unlicensed carrier.

In this application, N1ᵢ = 15 x 2^{k} kHz, where k may be an integer greater than or equal to 4 and less than or equal to 8, and N3ᵢ may be an integral power of 2.

In an example, as shown in Table 1, the following correspondence may exist between Nlᵢ, N2ᵢ, and N3ᵢ:

**Table 1**

| Subcarrier spacing (N1i) | Quantity of available sub carriers (N2i) | Quantity of IDFT points (N3i) | Sampling rate (GHz) |
|---|---|---|---|
| 480 kHz | 3744 | 4096 | 1.96 |
| 960 kHz | 1872 | 2048 | 1.96 |
| 1.92 MHz | 936 | 1024 | 1.96 |
| 3.84 MHz | 468 | 512 | 1.96 |
| 480 kHz | 7488 | 8192 | 3.93 |
| 960 kHz | 3744 | 4096 | 3.93 |
| 1.92 MHz | 1872 | 2048 | 3.93 |
| 3.84 MHz | 936 | 1024 | 3.93 |
| 960 kHz | 4800/6400 | 8192 | 7.86 |
| 1.92 MHz | 2400/3200 | 4096 | 7.86 |
| 3.84 MHz | 1200/1600 | 2048 | 7.86 |

It should be noted that in Table 1, the sampling rate = the subcarrier spacing N1ᵢ x the quantity of IDFT points N3ᵢ.

The following can be observed by using parameters in the above table. The sampling rate is less than 2.16 x Ncb GHz bandwidth. Therefore, if a parameter of a valid subcarrier in the LTE or the NR is used, that is, N2ᵢ = (N3ᵢ x N5ⱼ)N6ⱼ, a spectrum occupation rate may be low. For example, if only the subcarrier spacing is extended, and N6ⱼ = 4096 and N5ⱼ = 3300 in the licensed carrier are fully reused, effective bandwidth is 3300 x 0.48 = 1580 MHz. This is lower than a spectrum occupation rate of the 11ad in WIFI. Currently, bandwidth occupied by a single carrier signal in the 11ad is 1760 MHz, and bandwidth related to the OFDM in the 11ad is 1830 MHz. In a remediation method, more subcarriers may be used to specify that a quantity of available subcarriers is different from a same FFT size in the licensed spectrum. Based on calculation in the 11ad, 1800/0.48 = about 3750 subcarriers. To ensure that 12 subcarriers form one RB, about 312 RBs may be assumed.

For the 3.93 GHz sampling rate in Table 1, a signal bandwidth that can be supported is higher, and two contiguous bandwidths of 400 MHz adjacent to 2.16 GHz may be used. For 6600 subcarriers with equal-scale extension in the NR, that is, N6ⱼ = 8192, and N5ⱼ = 6600, in a case of 2 x 2.16 GHz in the IEEE 802.11ay, available channel bandwidth reaches (419 x 5.15625 + 355 x 5.15625) = 3990 MHz, but this already exceeds the sampling rate of 3.93 GHz. Therefore, in the case of 2 x 2.16 GHz, the NR-U can use at least 312 x 2 = 624 RBs, that is, 624 x 12 = 7488 subcarriers. Spectrum utilization similar to that in the IEEE 802.11ay standard can be achieved.

A sampling rate of 7.86 GHz may be used to process channel bonding cases of 3 x 2.16 GHz and 4 x 2.14 GHz, and different quantity of available subcarriers are separately selected. In the case of 3 x 2.16 GHz in the IEEE 802.11ay, the available channel bandwidth reaches (419 x 2 x 5.15625 + 355 x 5.15625) = 6151 MHz. The parameters in the above table can be roughly calculated based on the subcarrier spacing. In the case of 3 x 2.16 GHz, the available channel bandwidth reaches (419 x 3 x 5.15625 + 355 x 5.15625) = 8311 MHz. The parameters in the above table can be calculated based on the subcarrier spacing.

In this application, in another embodiment, N1ᵢ = 15 x 2^{k} kHz, where k may be an integer greater than or equal to 4 and less than or equal to 8, and N3 may be a common multiple of 2 and 3. N3 is less than or equal to a maximum value of N6.

To resolve a problem that the sampling rate may be less than 2.16 x Ncb GHz bandwidth in Table 1, N3ᵢ may be extended. Therefore, a constraint is introduced to the following: N3ᵢ is a common multiple of 2 and 3. Therefore, a DFT module used in the SC-FDMA technology for uplink transmission of the LTE may be reused.

Selection of a quantity N2ᵢ of available subcarriers meets a multiple of 36 = (3 x 12), and a scheduling granularity at which 12 subcarriers are one RB in an LTE and NR frequency domain resource is reused. A factor of 3 may be further used to perform downsampling on a terminal side, so as to reduce implementation complexity of the terminal. Specifically, determining of a quantity of available subcarriers is similar to that in Table 1, and the quantity of available subcarriers is kept close to a quantity of available subcarriers in a corresponding subcarrier spacing in Table 1. For example, the quantity of available subcarriers in a first row is close to a quantity of available subcarriers in a first row in Table 1, and is a multiple of 36.

In an example, as shown in Table 2, the following correspondence may exist between N1ᵢ, N2ᵢ, and N3ᵢ:

**Table 2**

| Subcarrier spacing (N1ᵢ) | Quantity of available subcarriers (N2ᵢ) | Quantity of IDFT points (N3ᵢ) | Sampling rate (GHz) |
|---|---|---|---|
| 480 kHz | 3456 | 5120 | 2.46 |
| 960 kHz | 1728 | 2560 | 2.46 |
| 1.92 MHz | 864 | 1280 | 2.46 |
| 3.84 MHz | 432 | 640 | 2.46 |
| 1.92 MHz | 1728 | 2560 | 4.96 |
| 3.84 MHz | 864 | 1280 | 4.96 |
| 1.92 MHz | 864 | 5120 | 9.83 |
| 3.84 MHz | 3456 | 2560 | 9.83 |

It should be noted that in Table 2, the sampling rate = the subcarrier spacing N1ᵢ x the quantity of IDFT points N3ᵢ.

In this application, N1ᵢ = 15 x 2^{k} kHz, where k may be an integer greater than or equal to 4 and less than or equal to 8, and N3ᵢ may be a common multiple of 2 and 5. N3ᵢ is less than or equal to a maximum value of N6.

To resolve a problem that the sampling rate may be less than 2.16 x Ncb GHz bandwidth in Table 1, N3ᵢ may be extended. Similarly, a constraint may also be introduced to the following: N3ᵢ is the common multiple of 2 and 5. Therefore, a DFT module used in the SC-FDMA technology for uplink transmission of the LTE may be reused.

Selection of a quantity N2ᵢ of available subcarriers meets a multiple of 60 = (5 x 12), and a scheduling granularity at which 12 subcarriers are one RB in an LTE and NR frequency domain resource is reused. A factor of 5 may be further used to perform downsampling on the terminal side, so as to reduce implementation complexity of the terminal. Specifically, determining of a quantity of available subcarriers is similar to that in Table 1, and the quantity of available subcarriers is kept close to a quantity of available subcarriers in a corresponding subcarrier spacing in Table 1. For example, the quantity of available subcarriers in the first row is close to the quantity of available subcarriers in the first row in Table 1, and is a multiple of 60.

In an example, as shown in Table 3, the following correspondence may exist between N1ᵢ, N2ᵢ, and N3ᵢ:

**Table 3**

| Subcarrier spacing (N1ᵢ) | Quantity of available subcarriers (N2ᵢ) | Quantity of IDFT points (N3ᵢ) | Sampling rate (GHz) |
|---|---|---|---|
| 480 kHz | 3600 | 6144 | 2.95 |
| 960 kHz | 1800 | 3072 | 2.95 |
| 1.92 MHz | 900 | 1536 | 2.95 |
| 3.84 MHz | 450 | 768 | 2.95 |
| 960 kHz | 3600 | 6144 | 5.90 |
| 1.92 MHz | 1800 | 3072 | 5.90 |
| 3.84 MHz | 900 | 1536 | 5.90 |

It should be noted that in Table 3, the sampling rate = the subcarrier spacing N1ᵢ x the quantity of IDFT points N3ᵢ.

It is appropriate that the subcarrier spacing is 960 kHz and 1.92 MHz. Because 2160/1.92 and 2160/0.96 are integers, when a larger quantity of FFT points is used to extend a plurality of 2.16 GHz channels, only a quantity of occupied subcarriers may be changed, to reduce inter-subcarrier interference. In addition, because of limitations of the ADC and the DAC, resolution accuracy of the ADC and the DAC that can reach a sampling rate above 10 GHz is usually lower than resolution accuracy of the ADC and the DAC that can reach a sampling rate around 1 GHz. As a result, a quantization error is introduced, and an OFDM parameter with a higher sampling rate is not provided.

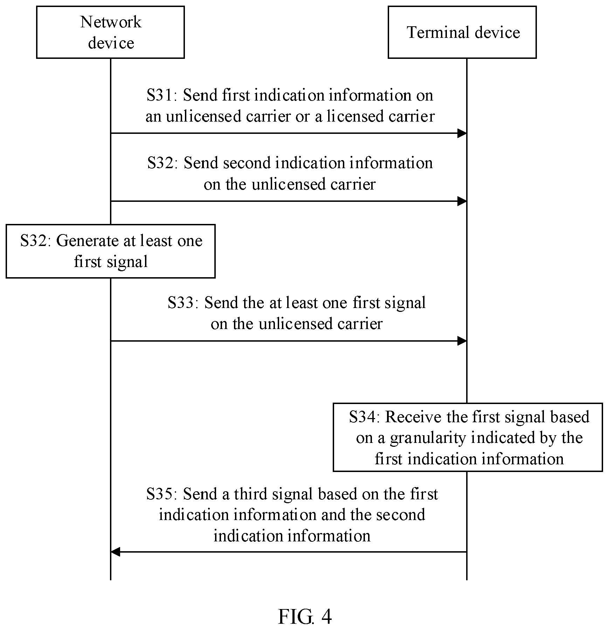

As shown in FIG. 4, this application provides a procedure of a signal sending method. A network device in the procedure corresponds to the Pcell base station or the Scell base station in FIG. 1, or corresponds to the first device in FIG. 2. A terminal device may correspond to the UE in FIG. 1, or correspond to the second device in FIG. 2. As shown in FIG. 4, the procedure is specifically as follows:

Step S31: The network device sends first indication information to the terminal device on a licensed carrier or an unlicensed carrier.

In this application, the first indication information is used to indicate that the terminal device receives a granularity of the first signal on the unlicensed carrier. A spacing between adjacent granularities is 1/2^{k4} ms, the spacing between adjacent granularities includes 12 x 2^{k5} orthogonal frequency division multiplexing OFDM symbols, and k4 x k5 = k, or a spacing between adjacent granularities is 1/2^{k2} ms, the spacing between adjacent granularities includes 14 x 2^{k3} OFDM symbols, and k2 x k3 = k.

In this application, scheduling of an NR-U unlicensed carrier is different from scheduling of an NR licensed carrier in the following aspects:

### Difference in time:

It is noted in this application that OFDM sending parameters N1ᵢ, N2ᵢ, and N3ᵢ in the unlicensed carrier are different from OFDM sending parameters N4ⱼ, N5ⱼ, and N6ⱼ in the licensed carrier. In a case in which N1ᵢ x N3ᵢ > N4ⱼ x N6ⱼ, it is appropriate that fine granularity is introduced in terms of time, to increase an opportunity of accessing a licensed spectrum. However, because a granularity scheduled in an unlicensed spectrum is very fine, signaling overheads are increased. It should be noted that if the scheduled granularity of the unlicensed carrier is finer than the licensed spectrum, a resource of the unlicensed carrier can only be scheduled by scheduling signaling of the unlicensed carrier. Therefore, corresponding scheduling signaling is sent in a scheduling period, to match a corresponding scheduling resource.

When scheduled granularities are the same, a quantity of OFDM symbols may be greater than a quantity of OFDM symbols in one scheduling granularity in NR. Therefore, in this case, extension is required to indicate an opportunity of a possible start OFDM symbol in the scheduling period. Upper layer signaling can be used for pre-configuration. A specific activation manner in a physical layer may also be related to a service type. For a high service priority, more opportunities are matched to initially transmit the OFDM symbol.

Because a greater subcarrier spacing is introduced in the unlicensed carrier, time occupied by each OFDM symbol (without a CP) is changed to 1/N1ᵢ. If a same quantity of OFDM symbols is maintained, a scheduling interval becomes smaller, for example, an interval of 1/2^{k} times of 0.5 ms, such as 0.25 ms or 0.125 ms, k is an integer, and N1 = 15 x 2^{k}.

If same scheduling time is maintained, in a scheduled granularity of 1 ms of accessing a channel in terms of time, a range of OFDM symbols changes from an original range of 1 to 14 to a range of 1 to 14 x 2⁵, 1 to 14 x 2⁶, and 1 to 14 x 2⁸. In this case, it indicates that a quantity of symbols is larger within 1 ms.

In a compromise manner, the scheduled granularity is also reduced, and a range of OFDM symbols in each scheduled granularity is also expanded. To be specific, a range of OFDM symbols included in a scheduled granularity, that is, an interval of 1/2^{k2} times of 1 ms, is 1 to 14 x 2^{k3}, so that k2 x k3 = k.

A specific indication method may be divided into multi-level indications. Specifically, 7 bits are occupied. An original indication that indicates 1 to 14 OFDM symbols is reused, and a coefficient indication related to a sampling rate is increased. 3 bits respectively represent a segment in a specific processing compression segment, and a specific symbol in each segment still follows the original indication, for example, specifically, 1 bit is used to represent an even-numbered slot or an odd-numbered slot, and 3 bits are used to represent 1 to 7 OFDM symbols.

Certainly, the original indication that indicates the 1 to 14 OFDM symbols may not be reused, and 6 or 7 bits are directly used to indicate a specific symbol number. In this way, for a sampling rate of 5 times, 1 bit can be saved.

Based on 12 symbols, it is assumed that a subcarrier spacing in a 60 GHz frequency band may be larger than the licensed carrier, resulting in very short time for each OFDM symbol. A cyclic prefix (Cyclic Prefix, CP) length represents delay spread of a propagation channel, and is not suitable for infinite compression. Therefore, a range of more CPs may be used in the unlicensed carrier than in the licensed carrier. To be specific, after IDFT and P/S conversion are performed on a module in FIG. 3a, there is a module in which the CP is inserted. After the ADC module described in FIG. 3b, there is a module in which the CP is removed. Unlike a normal (Normal) CP in the licensed carrier, which occupies less than 10% of overheads, a CP in the unlicensed carrier may occupy a larger proportion of an OFDM symbol.

In this application, a case similar to CP extension in LTE is provided, that is, a case in which there are 1 to 12 OFDM symbols in a slot, and a CP ratio is 1/4. Because the subcarrier spacing is widened, a range of OFDM symbols in 1 ms is changed to a range of 1 to 12 x 2⁵, 1 to 12 x 2⁶, or 1 to 12 x 2⁸, and an indication range is also similar.

Similarly, the compromise manner may be used. The scheduled granularity is also reduced, and a range of OFDM symbols in each scheduled granularity is also expanded. To be specific, a range of OFDM symbols included in a scheduled granularity, that is, an interval of 1/2^{k4} times of 1 ms, is 1 to 12 x 2^{k5}, so that k4 x k5 = k.

### Difference in frequency domain:

Because a bandwidth of 60 GHz is very large, even if a larger subcarrier spacing is used, an available subcarrier range is greater than a range in a licensed frequency band. Therefore, in this case, the extension is required to indicate an information bit of a corresponding frequency domain resource in an unlicensed frequency band. Some physical layer signaling fields that are not used in this mode may be reused for implementation.

Lengths of code blocks transmitted in corresponding resources are different:

Because the bandwidth of 60 GHz is very large, if a scheduled resource is excessively large, a length of a code block that can be transmitted in a transmission resource exceeds a maximum code block length in the licensed frequency band. In this way, an additional resource needs to be added for controlling, storage, encoding, or decoding. If a hardware or software resource in an NR licensed frequency band is expected to be reused, a code block length in the unlicensed carrier needs to be less than or equal to a maximum code block length in the licensed carrier.

Step S32: The network device sends second indication information to the terminal device on the unlicensed carrier.

In this application, the second indication information is used to indicate a quantity Xᵢ of available subcarriers of the terminal device in frequency domain, and N1ᵢ x Xᵢ < 400 MHz.

Step S32: The network device generates at least one first signal.

In this application, for a process of generating the first signal by the network device, refer to the foregoing description about generating the first signal in FIG. 2. Details are not described herein again.

Step S33: The network device sends the at least one first signal to the terminal device on the unlicensed carrier.

Step S34: The terminal device receives the first signal based on a granularity indicated by the first indication information.

Step S35: The terminal device sends a third signal to the network device based on the granularity indicated by the first indication information and an available subcarrier indicated by the second indication information.

In this application, the terminal device may specifically send, based on the granularity indicated by the first indication information, the third signal on the available subcarrier indicated by the second indication information.

As mentioned above, if the difference in time or in frequency is introduced to a signal sent by the base station, the following may be limited: A scheduled time frequency resource of a terminal does not exceed a scheduled configuration granularity and an indication range in the licensed carrier. Existing dynamic scheduling information and a hardware resource of the licensed carrier of the terminal are reused. In short, a terminal does not support a scheduled granularity of 0.125 ms. In this case, scheduling signaling of the base station for the terminal does not appear in scheduling signaling for 0.125 ms, and the terminal does not need to blindly detect a physical downlink control channel (Physical Downlink Control Channel, PDCCH) at a corresponding location. Power consumption of ADC and DAC is related to the sampling rate. Based on a requirement of a Nyquist sampling rate, in order that a signal can be received without overlapping, the sampling rate needs to be greater than OFDM signal bandwidth. If a terminal supports only a maximum of 400 MHz receive channel bandwidth through ADC and DAC, the base station needs to indicate a resource of the terminal in the 400 MHz bandwidth in the entire bandwidth, and the terminal may reuse the ADC module and the DAC module in a licensed carrier channel. In this way, implementation complexity and power consumption of the terminal can be greatly reduced. Because the licensed carrier is about 30 GHz and the bandwidth is less than 400 MHz, currently, the terminal with limited bandwidth may fully reuse intermediate frequency of the licensed carrier through scheduling. A baseband processing unit receives a 60 GHz signal, and only an additional 60 GHz radio frequency module is required. The hardware resource in the licensed carrier in the terminal device is greatly reused.

In this application, a subband size may be determined based on a resource in maximum bandwidth in the licensed frequency band, and 2.16 GHz is divided into a plurality of subbands that do not overlap.

Based on a suggestion in a method for generating the OFDM symbol, the subcarrier spacing in the licensed spectrum is relatively small, the subcarrier spacing in 60 GHz in the unlicensed frequency band is relatively large, and a quantity of IDFTs may be the same or different. It is learned that a parameter conversion relationship of the subband on a terminal side is as follows: A subcarrier of the subband is consistent with a subcarrier spacing sent by the base station, that is, consistent with the subcarrier spacing in the licensed spectrum, and the sampling rate is consistent with configuration in the licensed spectrum. N_{DFT} conversion is a multiple relationship of the sampling rate. As shown in Table 4, a parameter whose subcarrier spacing is 480 kHz is used as an example, and N_{DFT} is 6144/(2.95/0.49) = 1024. Therefore, it can be learned that the entire bandwidth is divided into six subbands. Currently, a quantity of available subcarriers in each subband may follow division in the LTE. For example, in the intermediate frequency of one RB, 12 subcarriers are carried, and in this case, 50 RBs are occupied herein.

It can be seen that a constraint on the licensed spectrum can support a quantity of Ndft points in the unlicensed spectrum (an unlicensed spectrum sampling rate/a licensed spectrum sampling rate). In this case, each division may be fixed, and a sequence number range is given, to determine a specific subband in which operation is performed.

Further, in the NR, device bandwidth is smaller than bandwidth supported by an NR base station, that is, in the bandwidth of 400 MHz can be supported by the licensed spectrum, for example, 100 MHz or 200 MHz. In this case, a secondary indication is required to indicate a specific frequency resource location in the subband. In this application, according to an optimal indication method, a resource of the subband is indicated first, and then a resource of the specific subband is indicated.

In an example of this application, as shown in Table 4, a subcarrier spacing of 480 kHz is used as an example to describe the process of this application in detail.

**Table 4**

| | Subcarrier spacing | Available subcarrier | Quantity of IDFT points | Sampling rate (GHz) |
|---|---|---|---|---|
| Configuration supported in a licensed spectrum | - | - | - | 0.49 |
| Configuration in a 60 GHz unlicensed spectrum | 480 kHz | 3600 | 6144 | 2.95 |
| Sub-band requirement | 480 kHz | 600 | 1024 | 0.49 |

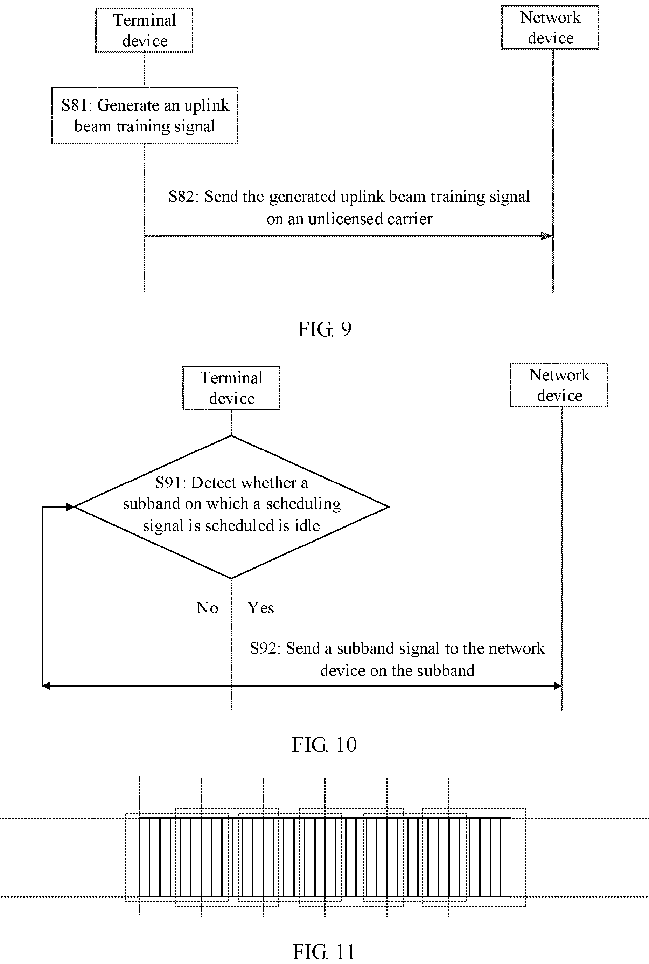

For a schematic diagram of a generated OFDM symbol in frequency domain based on the parameters shown in Table 4, refer to FIG. 11. It can be learned that the signal sent by the base station includes 6144 subcarriers, but only 3600 subcarriers in a center are occupied, and an effective bandwidth of 1.728 GHz (which is slightly lower than 1.83 GHz used in the 11ad, therefore, actually more subcarriers may be used, for example, it is considered that 660 subcarriers are used for each subband, a total of 3960 subcarriers are used, and an effective bandwidth of 1.9 GHz is occupied) is used. However, the terminal may occupy one or more of the six subbands obtained through fixed division, and an available subcarrier of each subband is not overlapped (six subareas are divided by using a long dotted line). Unlike a solution in which the base station directly divides 2.16 GHz into a plurality of subbands for transmission (the subbands are not overlapped, and a guard band needs to be added between the subbands), the plurality of subbands herein are overlapped. That is, an actual filter performs filtering based on a dotted line frame. Although adjacent subcarrier signals are also received in the subbands, OFDM symbol subcarriers are orthogonal to each other. Therefore, after time-frequency transformation is performed, 600 subcarriers of the center are directly obtained without introducing inter-sub carrier interference. In this way, it is also beneficial for the terminal that has a broadband capability. A wanted signal can be obtained by using a 2.16 GHz filter instead of many sub-filters, and wanted subbands are OFDM orthogonal.

It should be noted that, in this application, a start frequency sequence number and occupied bandwidth may alternatively be used for indication.

The occupied bandwidth matches a maximum sampling rate that can be supported in the licensed spectrum, and may be a granularity such as 400 MHz, 200 MHz, or 100 MHz. A quantity of valid subcarriers occupied in divided bandwidth is indicated.

It should be noted that the fixed division method is relatively simple, and for a device capability, division means pre-division. However, it is relatively flexible to perform indication by using the start frequency sequence number and the occupied bandwidth, and two-level indication is not required.

It should be noted that in this application, a sequence of performing step S31 to step S34 is not limited, and any combination of the sequence of performing step S31 and step S34 falls within the protection scope of this application. For example, step S31 may be performed earlier than step S32, or may be performed later than step S32.

In this application, the following several OFDM signal configuration parameters and OFDM parameters after subband division are further provided, which may be respectively shown in Table 5, Table 6, and Table 7.

**Table 5**

| | Subcarrier spacing | Available subcarrier | Quantity of IDFT points | Sampling rate (GHz) |
|---|---|---|---|---|
| Configuration supported in a licensed spectrum | - | - | - | 0.49 |
| Configuration in a 60 GHz unlicensed spectrum | 480 kHz | 3744 | 4096 | 1.96 |
| Sub-band requirement | 480 kHz | 936 | 1024 | 0.49 |

**Table 6**

| | Subcarrier spacing | Available subcarrier | Quantity of IDFT points | Sampling rate (GHz) |
|---|---|---|---|---|
| Configuration supported in a licensed spectrum | - | - | - | 0.49 |
| Configuration in a 60 GHz unlicensed spectrum | 3.84 MHz | 432 | 768 | 2.95 |
| Sub-band requirement | 3.84 MHz | 72 | 128 | 0.49 |

**Table 7**

| | Subcarrier spacing | Available subcarrier | Quantity of IDFT points | Sampling rate (GHz) |
|---|---|---|---|---|
| Configuration supported in a licensed spectrum | - | - | - | 0.49 |
| Configuration in a 60 GHz unlicensed spectrum | 960 MHz | 1800 | 3072 | 2.95 |
| Sub-band requirement | 960 MHz | 300 | 512 | 0.49 |

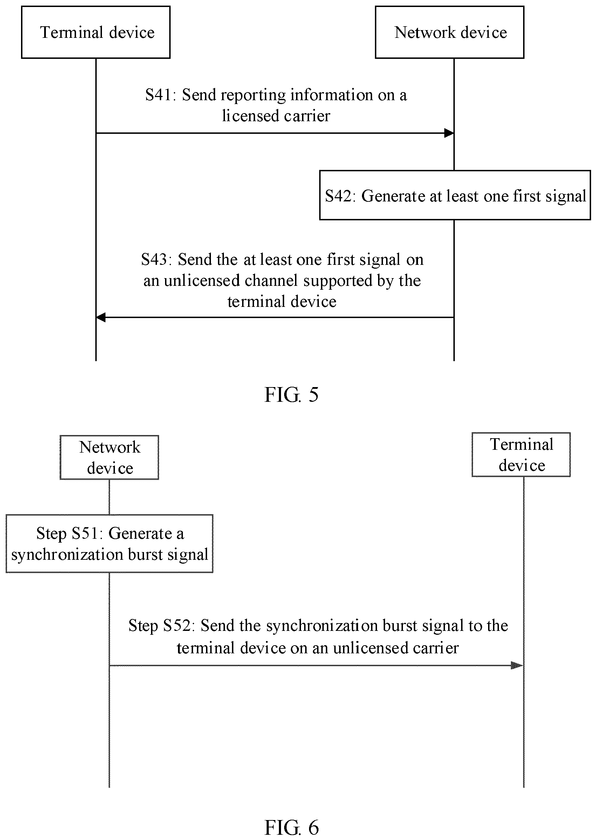

As shown in FIG. 5, this application provides a procedure of a signal sending method.

A network device in the procedure corresponds to the Pcell base station or the Scell base station in FIG. 1, or corresponds to the first device in FIG. 2. A terminal device may correspond to the UE in FIG. 1, or correspond to the second device in FIG. 2. As shown in FIG. 5, the procedure is specifically as follows:

Step S41: The terminal device sends reporting information to the network device on a licensed carrier.

In this application, the reporting information carries a field indicating that the terminal device supports an unlicensed carrier capability, and the field indicating that the terminal device supports the unlicensed carrier capability includes at least one of a parameter indicating that the terminal device supports an unlicensed channel range, a parameter indicating that the terminal device supports a bandwidth sending capability, and a parameter indicating that the terminal device supports a bandwidth receiving capability.

In this application, the parameter indicating that the terminal device supports the unlicensed channel range may be specifically used to represent an unlicensed channel supported by the terminal device. In actual application, an unlicensed frequency band of 60 GHz is very wide, and center frequencies are respectively seven contiguous 2.16 GHz channels: 58.32 GHz, 60.48 GHz, 62.64 GHz, 64.8 GHz, 66.96 GHz, 69.12 GHz, and 71.28 GHz. A function of some terminal devices is limited, for example, an intelligent wearable device may only support some unlicensed channels. Therefore, the terminal device needs to report, to the network device, the unlicensed channel supported by the terminal device, so that the network device sends a first signal on the unlicensed channel supported by the terminal device.

In this application, the parameter indicating that the terminal device supports the bandwidth sending capability may be specifically used to represent a maximum bandwidth sending capability supported by the terminal device, and the parameter indicating that the terminal device supports the bandwidth receiving capability may be specifically used to represent a maximum bandwidth receiving capability supported by the terminal device, so that the network device schedules information for the terminal device within a transmission/reception capability range of the terminal device.

Step S42: The network device generates at least one first signal.

In this application, a frequency domain range of the first signal is less than or equal to a bandwidth receiving capability supported by the terminal device.

Step S43: The network device sends the at least one first signal to the terminal device on an unlicensed channel supported by the terminal device, where the unlicensed channel includes the unlicensed carrier.

In this application, the network device may determine, based on the parameter indicating that the terminal device supports the unlicensed channel range in the reporting information of the terminal device, the unlicensed channel supported by the terminal device, and then send the at least one first signal on the unlicensed channel supported by the terminal device. For example, the unlicensed channel indicated by the parameter indicating that the terminal device supports the unlicensed channel range in the reporting information is 57.24 GHz to 59.4 GHz. In this case, the network device may send the first signal on the unlicensed channel of 57.24 GHz to 59.4 GHz.

It can be learned from the foregoing that, according to the foregoing method, a terminal device with a limited capability may also successfully perform communication by using an unlicensed spectrum, to improve utilization of the unlicensed spectrum.

As shown in FIG. 6, this application provides a procedure of a signal sending method. A network device in the procedure may correspond to the first device in FIG. 2, a terminal device may correspond to the second device in FIG. 2, and a synchronization burst signal SS-Burst may correspond to the first signal in FIG. 2. As shown in FIG. 6, the procedure includes the following steps.

Step S51: The network device generates the SS-Burst.

The SS-Burst includes L SS-Blocks, and one SS-Block includes a primary synchronization signal (primary synchronization signal, PSS), a secondary synchronization signal (secondary synchronization signal, SSS), and a physical broadcast channel (physical broadcast channel, PBCH).

A process of generating the SS-Block is similar to another process of generating an OFDM symbol. First, a value on a valid subcarrier in the OFDM symbol is obtained, including corresponding content data in the PSS, the SSS, or the PBCH channel that may be in a corresponding carrier in the OFDM symbol of the SS-Burst.

In this application, for a design of a PSS sequence and an SSS sequence, a design in a licensed spectrum frequency may be used. For example, the PSS may be generated by an m-sequence whose length is 127, and a generator polynomial corresponding to the PSS may be x⁷+x⁴+1. The SSS may be generated by two m-sequences whose length is 127, and generator polynomials of two m polynomials are x⁷+x+1 and x⁷+x⁴+1.

In this application, the physical broadcast channel carries a first field. The first field is a field that is not carried in the physical broadcast channel sent by the network device on a licensed carrier. Alternatively, the first field is different from a second field, and the second field is a field that is carried in the physical broadcast channel sent by the network device on the licensed carrier and that corresponds to the first field. The first field may indicate, for example, some important information indicated by a PDDCH, a SIB 1, or a SIB 2 in the licensed carrier. For example, in current subframes, which are uplink resources and which are downlink resources, for example, information about a physical random access channel (Physical Random Access Channel, PRACH) channel resource. Currently, content carried in the PBCH channel in a licensed spectrum is also actually discussed. The PBCH channel in the licensed spectrum may carry a system frame number (System Frame Number, SFN), time information in a radio frame, control resource set (Control Resource Set, CORESET) information, PDSCH scheduling information, UE fast camping information, cell ID extension information, tracking RS information, and the like. The SFN, the UE fast camping information, and the cell ID extension information may be notified to the terminal by using the licensed carrier in an unlicensed carrier.

In addition, different from the licensed carrier, the unlicensed carrier may use a larger subcarrier spacing, and more OFDM symbols may exist within 1 ms. A path loss of high frequency needs to be compensated, and more beams need to be trained. Therefore, more SS-Block locations in terms of time are provided. In a case in which one slot has 14 or 12 symbols, there may be more possible transmission locations in a period of 5 ms and 10 ms. However, it is considered whether a monitoring spectrum in an unlicensed spectrum is idle, and first one or two OFDM symbols in each slot may be occupied. Therefore, the network device also needs to be allowed to send only some of the OFDM symbols, or one OFDM symbol later than a starting symbol of the licensed carrier. In this way, it is possible that the SS-Block cannot be entirely sent. To reuse hardware or software in an NR licensed carrier, an arrangement relationship among the PSS, the SSS, and the PBCH in the SS-Burst also reuses a definition in the NR licensed carrier. The relationship is PSS-PBCH-SSS-PBCH, to be specific, after an OFDM symbol in which the PSS is located, adjacent OFDM symbols carry a first PBCH channel, and subsequent adjacent OFDM symbols carry the SSS, and subsequently carry a second PBCH channel. However, the PBCH may not be sent in the SS-Block that cannot be entirely sent. Because the current licensed carrier sending sequence is PSS-PBCH-SSS-PBCH, if there are only two OFDM transmission opportunities, the network device is allowed to send, on the unlicensed carrier, some SS-Blocks that include only PSS-SSS. The some SS-Blocks herein mainly indicate that the SS-Block occupies only two OFDM symbols, and are different from a common SS-Block that occupies four OFDM symbols.

Step S52: The network device sends the SS-Burst to the terminal device on an unlicensed carrier.

In an example of this application, the network device may send the SS-Block by using 256 subcarriers in the N2 available subcarrier centers in the unlicensed carrier, where N2 is an integer greater than or equal to 256.

In another example of this application, the N2ᵢ available subcarriers in the unlicensed carrier include at least one subband, and a quantity of subcarriers included in each subband is greater than or equal to 256. Specifically, the network device may send the SS-Block to the terminal device by using 256 subcarriers in each subband center.

In this application, the network device may send the PSS, the SSS, and the PBCH in a plurality of subbands by using different antenna arrays. For example, the N2ᵢ available subcarriers in the unlicensed carrier include at least a first subband and a second subband. In this case, the network device may send the PSS, the SSS, and the PBCH in the first subband by using a first antenna array, and send the PSS, the SSS, and the PBCH in the second subband by using a second antenna array. The first antenna array is different from the second antenna array, and the first subband is different from the second subband. Certainly, in this application, if the N2ᵢ available subcarriers further include a third subband, a fourth subband, and the like, correspondingly, the network device may send the PSS, the SSS, and the PBCH in the third subband by using a third antenna array, and send the PSS, the SSS, the PBCH, and the like in the fourth subband by using a fourth antenna array. Details are not described herein again, and all the foregoing cases are within the protection scope of this application.

In this application, methods for sending the PSS and the SSS are further specifically disclosed, and the methods are specifically as follows:

Method 1: The network device symmetrically transmits the PSS and the SSS on a direct current carrier of an entire system, where the PSS and the SSS occupy 127 subcarriers.

It should be noted that in this application, for a subband system terminal, if a quantity of valid subcarriers is less than 127, a truncated receiving manner is used. A design in LTE can be reused by using the foregoing method 1.

Method 2: The network device sends the PSS and the SSS at a center of a valid subcarrier corresponding to each subband, where the PSS and the SSS occupy 127 subcarriers.

PSS and SSS signals in each subband may have coefficients of +1, -1, +j, and -j, and a transmit peak to average power ratio (PAPR-Peak to Average Power Ratio, PAPR) is reduced.

Method 3: According to a specific rule, the network device transmits, in a frequency hopping manner, the PSS and the SSS in a valid subcarrier center corresponding to each subband. A quantity of available subcarriers in each subband is greater than 127 subcarriers.

According to the foregoing method 2 and method 3, the terminal device may receive a synchronization signal in a subband on which the terminal device works, and no frequency adjustment is required.

In a 5 GHz channel, a discovery signal is sent in a listen before talk (Listen Before Talk, LBT) manner of Cat2, to be specific, the signal is sent immediately after idle 25 µs are detected. This problem changes in the high frequency. Because the discovery signal in low frequency does not include the PBCH, the discovery signal is mainly the PSS/SSS signal. These two signals occupy only two symbols. A probability of collision is not very high. For the high frequency, the PSS/SSS/PBCH signal forms one SS-Block, where the PSS/SSS obtains a physical cell identifier PCID (Physical Cell Identification), and a beam identifier in the PBCH completes downlink beam training. A total of four OFDM symbols need to be occupied, and a plurality of SS-Blocks need to be sent in a plurality of beam directions during beam scanning. Therefore, the base station sends the SS-Block to detect the following: If 25 µs are detected before each SS-Block is sent, sending cannot be completed in many beam directions due to beam collision. Therefore, it is necessary to detect whether the channel is idle in a unit of SS-burst. In one SS-Burst, it is detected whether the channel is idle only before a first SS-Block is sent. Before a plurality of SS-Blocks in the SS-Burst are sent, it is not detected whether the channel is idle.

Herein, there are two problems: Total channel occupation time of the SS-burst at 60 GHz cannot exceed maximum channel occupation time, for example, a limitation of 1 ms, 2 ms, 5 ms, and 10 ms. Within the maximum channel occupation time, a quantity of the SS-Blocks may be limited.

In this application, the solution to the foregoing two problems is as follows: For the SS-Burst, different maximum channel occupation time and different LBT priorities are used. The maximum occupation time in the SS-burst is a function of the quantity of the SS-Blocks. It is assumed that in 1 ms, a maximum of L SS-blocks are allowed to be sent. There are LgNB beams that need to be trained by the base station. When LgNB > L, a resource period of LgNB/L ms needs to be taken after the base station trains all beams. If the base station expects to train all the beams at a time, detection needs to be performed in a detection manner of a maximum channel constraint, and reference may be made to a method designed at different priority levels in Cat-4. When the maximum channel occupation time is large, a time window for detection waiting also increases. Alternatively, a beam LgNR to be trained by the base station may be distributed and sent in different time periods, and each time period is the maximum channel occupation time of 1 ms. In this case, the plurality of sent SS-Blocks do not need to be detected in each time period, and only a Cat2 detection manner is used when the first SS-Block is sent.

In addition, a case in which a sent SS-Burst needs to be discarded because of a plurality of collisions detected by the base station is also allowed, and this requires channel switching. In this case, for the terminal on which an original carrier has been added, these terminals need to be handed over to another carrier detected by the base station. Actually, original carrier configuration is released and new carrier configuration is added. However, if a new carrier is still in a 60 GHz frequency band, the terminal may eliminate work of downlink beam training and uplink initial beam training. However, downlink synchronization and uplink work still cannot be avoided. Therefore, the network device needs to notify the terminal on the licensed carrier and recommends the terminal for using an original uplink beam and downlink beam on a newly activated carrier. Therefore, when a carrier is configured, a resource of the SS-Burst of a corresponding downlink beam and a resource in which the SS-Block is located need to be notified, so as to accelerate downlink synchronization completed by the terminal on the new carrier. A corresponding uplink beam training resource needs to be notified, such as a PRACH resource, to accelerate uplink synchronization.

In this application, the terminal device has only one receive radio frequency channel in the 60 GHz frequency band, and a bandwidth of the channel is less than 2.16 GHz. A relatively direct method is that the terminal with a limited capability is not allowed to send an uplink signal. This is conducive to coexistence. A subband terminal cannot perform sending by using 60 GHz, a 60 GHz transmit radio frequency channel does not need to be designed. For a device with a low capability, costs can be further saved. In addition to prohibiting the terminal with the limited capability from sending the uplink signal, the present invention further provides the following solution to assist the terminal with the limited capability in sending the uplink signal.

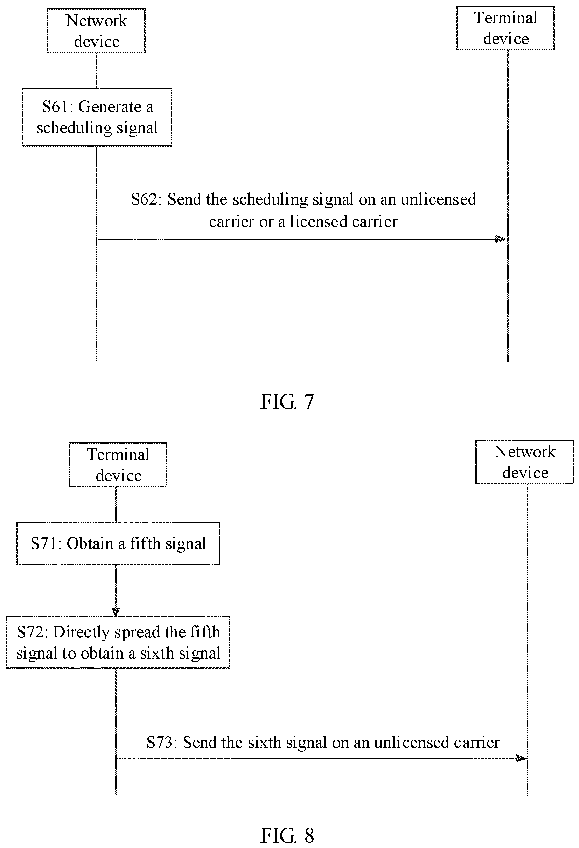

As shown in FIG. 7, this application provides a procedure of a signal sending method. A network device in the procedure may correspond to the first device in FIG. 2, a terminal device may correspond to the second device in FIG. 2, and a scheduling signal may correspond to the first signal in FIG. 2 or the second signal in FIG. 2. As shown in FIG. 7, the procedure includes the following steps.

Step S61: The network device generates the scheduling signal, where the scheduling signal is used to indicate that a total bandwidth of uplink signals sent by the plurality of terminal devices on an unlicensed carrier is greater than or equal to 70% of 2.16 GHz.

Step S62: The network device sends the scheduling signal to the plurality of terminal devices on the unlicensed carrier or a licensed carrier.

In this application, the network device may schedule the plurality of terminal devices close to each other to send subband signals, and a total bandwidth of the subband signals sent by the plurality of terminal devices is greater than or equal to 70% of unlicensed channel bandwidth (2.16 GHz).

Received beam identifiers are consistent, and an energy difference is less than a threshold or a TA difference is less than the threshold. From a positioning perspective, a beam angle and a distance to a base station determine that locations of these terminals are close to each other. A plurality of UEs may be considered as one UE, so that sending a signal by the terminal in this cluster meets a requirement of channel occupation bandwidth.

In this application, according to the foregoing method, the subband signal sent by the terminal device can meet a requirement of an unlicensed system.

It should be noted that in this application, the procedure shown in FIG. 2 may be specifically applied to the following: The terminal device sends the signal to the Pcell base station or the Scell base station. In this case, the first device in the procedure shown in FIG. 2 corresponds to the UE in FIG. 1, and the second device corresponds to the Pcell base station or the Scell base station in FIG. 1.

As shown in FIG. 8, this application provides a procedure of a signal sending method. A terminal device in the procedure may correspond to the first device in FIG. 2, a network device may correspond to the second device in FIG. 2, and an uplink beam training signal may correspond to the first signal in FIG. 2. As shown in FIG. 8, the procedure includes the following steps.

Step S71: After receiving a scheduling signal sent by the network device, the terminal device obtains a fifth signal.

In this application, the fifth signal may be specifically a reference signal. The fifth signal occupies P contiguous available subcarriers, and is transformed into time domain by using N3ᵢ point IDFT transform, P is less than or equal to N2i//W, and both P and W are integers.

The reference signal may be designed as a signal with a low PAPR, such as a Zadeoff-chu sequence or another signal with low computational complexity.

Step S72: The terminal device directly spreads the fifth signal to obtain a sixth signal, where a spreading factor of the direct spreading of the terminal device is W.

A DAC sampling rate is not affected because of analog baseband implementation. For simplicity of implementation, hadamard code is used for spreading code. After the spreading, signal bandwidth is greater than or equal to 70% of unlicensed channel bandwidth (2.16 GHz).

Step S73: The terminal device sends the sixth signal to the network device on an unlicensed carrier.

In this application, after receiving the sixth signal, the network device may despread the sixth signal to obtain the fifth signal, where a despreading factor of the despreading may be W. In this application, when the fifth signal is a reference signal, the network device performs channel estimation, synchronization, parameter phase tracking, data demodulation, and the like based on the fifth signal.

It should be noted that the terminal device may send a subband signal on at least one subband on which the scheduling signal is scheduled, and bandwidth occupied by each subband signal is less than 70% of 2.16 GHz. Further, before sending a subband OFDM signal, the terminal device sends the reference signal in the front K3 OFDM symbols by using an analog baseband sequence direct spreading method, so that the subband signal is spread to 2.16 GHz. A function is to enable an 11ad device to perform energy detection of the 2.16 GHz bandwidth to achieve coexistence.

It should be noted that in this application, the procedure shown in FIG. 2 may be specifically applied to the following: The terminal device sends the signal to the Pcell base station or the Scell base station. In this case, the first device in the procedure shown in FIG. 2 corresponds to the UE in FIG. 1, and the second device corresponds to the Pcell base station or the Scell base station in FIG. 1.

As shown in FIG. 9, this application provides a procedure of a signal sending method. A terminal device in the procedure may correspond to the first device in FIG. 2, a network device may correspond to the second device in FIG. 2, and an uplink beam training signal may correspond to the first signal in FIG. 2. As shown in FIG. 9, the procedure includes the following steps.

Step S81: The terminal device generates an uplink beam training signal.

Step S82: The terminal device sends the uplink beam training signal on an unlicensed carrier.

It should be noted that in high frequency, before sending an uplink signal, the terminal needs to obtain a sending parameter of the terminal. 60 GHz is far apart from another licensed spectrum. As a result, a transmit parameter in the licensed spectrum cannot be fully reused. The transmit parameter includes uplink transmit power, an uplink TA advance, and an uplink transmit beam. Although these parameters do not need to be re-obtained before each sending, a resource for initial uplink synchronization provided by a device that has lost the foregoing parameters needs to be reserved for the terminal. Therefore, if a preamble preamble design in a PRACH channel in the licensed spectrum is reused in a channel sequence, transmit signal bandwidth is less than 2.16 x 70%. Therefore, the method in step S61 and S62 needs to be used to schedule a plurality of terminals with close locations to perform transmission on different subbands. Alternatively, a signal obtained by spreading a preamble may be transmitted by using the method in step S71 and S72. To be specific, a preamble signal in the licensed spectrum is used as a fifth signal, a sixth signal is obtained after the spreading, and a bandwidth requirement is met. To train a plurality of beam directions, the uplink beam training signal may be sent for a plurality of times.

In this application, according to the foregoing method, a bandwidth-limited terminal can also use an unlicensed spectrum, to obtain a higher throughput.

In a conventional LAA and eLAA technology, before sending uplink data, the terminal device further needs to perform channel state detection to obtain an idle status and an occupation status of the channel. A terminal with a limited capability does not have a capability to detect a 2.16 GHz channel. Therefore, in this application, when the terminal with the limited capability is scheduled to perform sending, an uplink resource of the terminal with the limited capability may be allocated to maximum transmission time in which a base station performs transmission. The terminal with the limited capability performs energy detection on only a subband before sending, and if the subband is idle, the terminal transmits the uplink signal in a time-frequency resource allocated by the base station.

As shown in FIG. 10, this application further provides a procedure of a signal sending method. A terminal device in the procedure may correspond to the first device in FIG. 2, a network device may correspond to the second device in FIG. 2, and an unlicensed carrier includes at least one subband. As shown in FIG. 10, the procedure includes the following steps.

Step S91: The terminal device detects whether a subband on which a scheduling signal is scheduled is idle. If the subband is idle, step S92 is performed; or if the subband is not idle, the terminal device continues to detect whether another subband on which the scheduling signal is scheduled is idle. The terminal device performs detection circularly and sequentially until all subbands on which the scheduling signal is scheduled are detected.

In an example of this application, the terminal device may perform listening by using one or more subband radio frequency channels to obtain a listened power value. Because a terminal with a limited capability does not have a capability of simultaneously receiving entire 2.16 GHz channel bandwidth, the terminal device needs to separately receive a signal in each subband through time division or by using a plurality of receive subband radio frequency channels, and compare weighted average values of a plurality of listened power values with preset power. When the listened power value is greater than the preset power, it may be considered that a current subband radio frequency channel is busy. When the listened power value is not greater than the preset power, it is considered that the current subband radio frequency channel is idle. The terminal with the limited capability cannot obtain received signal energy in the 2.16 GHz channel at a time, and therefore the terminal with the limited capability is different from a terminal that has a 2.16 GHz channel bandwidth capability. The terminal with the limited capability needs to have longer listening time or higher preset power.

In this application, a bandwidth of the subband radio frequency channel is consistent with a bandwidth capability in a licensed spectrum, such as 500 MHz, 400 MHz, 200 MHz, or 100 MHz.

Step S92: The terminal device sends a subband signal to the network device on the subband.

According to the method in this application, a broadband-limited terminal may also communicate by using an unlicensed spectrum, so that a throughput of the terminal device is higher.

It should be noted that "a plurality of' in this application means two or more. The terms "first", "second", and the like described in this application are used only to perform distinguishing description, and are not used to indicate or imply relative importance, or to indicate or imply a sequence.

It should be also noted that, in the embodiments of this application, some scenarios are described by using an example of a scenario of a 4G network in a wireless communications network. It should be noted that the solutions in the embodiments of this application may be further applied to another wireless communications network, and a corresponding name may also be replaced with a name of a corresponding function in another wireless communications network.

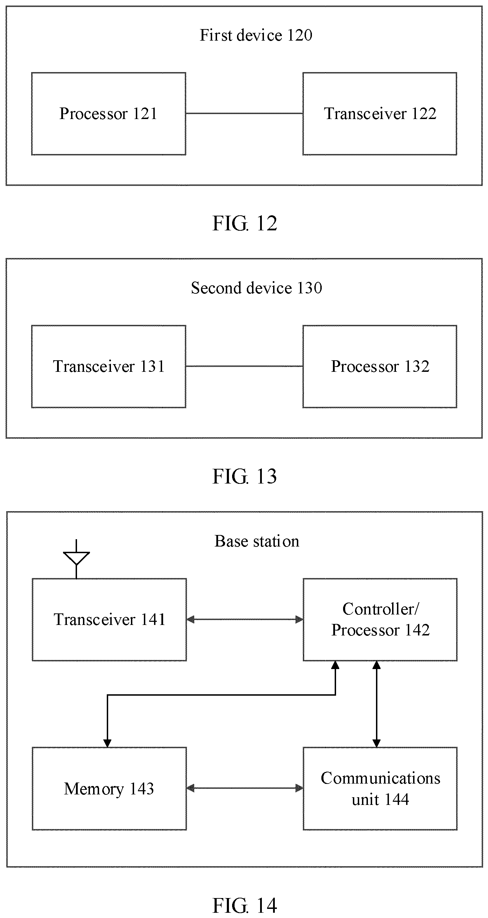

FIG. 12 is a possible schematic structural diagram of a first device in the foregoing embodiments of this application. The first device may be the UE, the Pcell base station, or the Scell base station in FIG. 1, or the first device in FIG. 2. As shown in FIG. 12, the first device 120 may include:
a processor 121, configured to generate at least one first signal based on an i^{th} set of parameters in a first parameter, where the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, and I ≥ i ≥ 1; and
a transceiver 122, configured to send the at least one first signal to a second device on an unlicensed carrier.

The processor 121 is further configured to generate at least one second signal based on a j^{th} set of parameters in a second parameter, where the second parameter includes J sets of parameters, the j^{th} set of parameters includes a subcarrier spacing N4ⱼ, a quantity N5ⱼ of available subcarriers, and a quantity N6ⱼ of IDFT points, and J ≥ j ≥ 1.

The transceiver 122 is further configured to send the at least one second signal to the second device on a licensed carrier, where N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

FIG. 13 is a possible schematic structural diagram of a second device in the foregoing embodiments of this application. The second device may be the UE, the Pcell base station, or the Scell base station in FIG. 1, or the second device in FIG. 2. As shown in FIG. 13, the second device 130 includes:
a transceiver 131, configured to receive, on an unlicensed carrier, at least one first signal sent by a first device, where the first signal is generated based on an i^{th} set of parameters in a first parameter, the first parameter includes I sets of parameters, the i^{th} set of parameters includes a subcarrier spacing N1ᵢHz, a quantity N2ᵢ of available subcarriers, and a quantity N3ᵢ of discrete Fourier transform IDFT points, and I ≥ i ≥ 1, where
the transceiver 131 is further configured to receive, on a licensed carrier, at least one second signal sent by the first device, where the second signal is generated based on a j^{th} set of parameters in a second parameter, the second parameter includes J sets of parameters, the j^{th} set of parameters includes a subcarrier spacing N4ⱼ, a quantity N5ⱼ of available subcarriers, and a quantity N6ⱼ of IDFT points, J ≥ j ≥ 1, N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ); and
a processor 132, configured to process the first signal and the second signal.

FIG. 14 is a possible schematic structural diagram of a base station in the foregoing embodiments of this application. The base station may be the Pcell base station or the Scell base station in FIG. 1, or the first device or the second device in FIG. 2.

In this application, the base station includes a transceiver 141 and a controller/processor 142. The transceiver 141 may be configured to: support receiving and sending information between the base station and the terminal device in the foregoing embodiments, and support radio communication between the base station and a core network device.

The controller/processor 142 is configured to perform various functions used for communication with the terminal device and the core network device. In an uplink, an uplink signal from the terminal device is received by using an antenna, is demodulated by the transceiver 141, and is further processed by the controller/processor 142 to restore service data and signaling information that are sent by the terminal device. In a downlink, service data and a signaling message are processed by the controller/processor 142, and demodulated by the transceiver 141 to generate a downlink signal, and the downlink signal is transmitted to the UE by using an antenna. The controller/processor 142 is further configured to: perform the signal sending method described in the foregoing embodiments, generate at least one first signal based on an i^{th} set of parameters in a first parameter, send the at least one first signal on an unlicensed carrier, generate at least one second signal based on a j^{th} set of parameters in a second parameter, and send the at least one second signal on a licensed carrier; or perform the signal receiving method described in the foregoing embodiments, receive the at least one first signal on the unlicensed carrier, receive the at least one second signal on the licensed carrier, and perform corresponding processing on the first signal and the second signal. The controller/processor 142 is further configured to perform processing processes related to the base station in FIG. 4 to FIG. 10 and/or is configured to perform another process of the technology described in this application. The base station may further include a memory 143 that may be configured to store program code and data that are of the base station. The base station may further include a communications unit 144, configured to support the base station in communicating with another network entity, for example, communicating with the core network device.

It may be understood that FIG. 14 shows only a simplified design of the base station. In actual application, the base station may include any quantity of transmitters, receivers, processors, controllers, memories, communications units, and the like, and all base stations that can implement this application fall within the protection scope of this application.

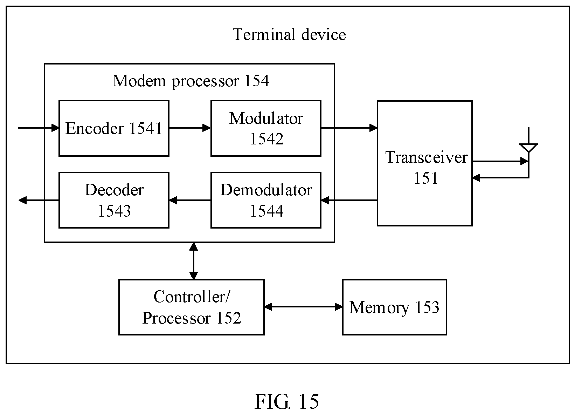

FIG. 15 is a simplified schematic diagram of a possible design structure of a terminal device according to an embodiment of this application. The terminal device may be the Pcell base station or the Scell base station in FIG. 1, or the first device or the second device in FIG. 2. The terminal device includes a transceiver 151 and a controller/processor 152, and may further include a memory 153 and a modem processor 154.

The transceiver 151 performs adjustment (for example, analog conversion, filtering, amplification, and up-conversion) on the output sample, and generates an uplink signal. The uplink signal is transmitted by an antenna to the base station in the foregoing embodiments. In a downlink, the antenna receives a downlink signal transmitted by the base station in the foregoing embodiments. The transceiver 151 performs adjustment (for example, filtering, amplification, down-conversion, and digitization) on a signal received from the antenna, and provides an input sample. In the modem processor 154, an encoder 1541 receives service data and a signaling message that are to be sent in an uplink, and performs processing (for example, formatting, encoding, and interleaving) the service data and the signaling message. A modulator 1542 further performs processing (for example, symbol mapping and modulation) the encoded service data and the encoded signaling message, and provides an output sample. A decoder 1543 performs processing (for example, de-interleaving and decoding) on the symbol estimation, and provides decoded data and a decoded signaling message that are to be sent to the terminal device. A demodulator 1544 performs processing (for example, demodulation) on the input sample, and provides the symbol estimation. The encoder 1541, the modulator 1542, the decoder 1543, and the demodulator 1544 may be implemented by the combined modem processor 154. These units perform processing based on a wireless technology (for example, an access technology in LTE or another evolved system) used by a radio access network.

The controller/processor 152 controls and manages an action of the terminal device, and is configured to perform processing performed by the terminal device in the foregoing embodiments. The terminal device may be configured to: perform the signal sending method described in the foregoing embodiments, generate at least one first signal based on an i^{th} set of parameters in a first parameter, send the at least one first signal on an unlicensed carrier, generate at least one second signal based on a j^{th} set of parameters in a second parameter, and send the at least one second signal on a licensed carrier; or perform the signal receiving method described in the foregoing embodiments, receive the at least one first signal on the unlicensed carrier, receive the at least one second signal on the licensed carrier, and perform corresponding processing on the first signal and the second signal. In an example, the controller/processor 152 may be configured to support the terminal device in performing the content related to the terminal device in FIG. 4 to FIG. 10. The memory 153 is configured to store program code and data that are used by the terminal device.

An embodiment of this application further provides a readable storage medium, including an instruction, and when the instruction is run on a communications device, the communications device is enabled to perform the foregoing signal sending method or the signal receiving method.

An embodiment of this application further provides a chip, where the chip is connected to a memory, and is configured to read and execute a software program stored in the memory, so as to implement the foregoing signal receiving method.

An embodiment of this application further provides a chip, where the chip is connected to a memory, and is configured to read and execute a software program stored in the memory, so as to implement the foregoing signal sending method.

A person skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer readable memory that can instruct the computer or any other programmable data processing device to work in a specific manner, so that the instructions stored in the computer readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A signal sending method, comprising:
generating, by a first device, at least one first signal based on an i^{th} set of parameters in a first parameter, wherein the first parameter comprises I sets of parameters, the i^{th} set of parameters comprises a subcarrier spacing N1ᵢHz, a quantity N2ᵢ of available subcarriers, and a quantity N3ᵢ of discrete Fourier transform IDFT points, and I ≥ i ≥ 1;
sending, by the first device, the at least one first signal to a second device on an unlicensed carrier;
generating, by the first device, at least one second signal based on a j^{th} set of parameters in a second parameter, wherein the second parameter comprises J sets of parameters, the j^{th} set of parameters comprises a subcarrier spacing N4ⱼ, a quantity N5ⱼ of available subcarriers, and a quantity N6ⱼ of IDFT points, and J ≥ j ≥ 1; and
sending, by the first device, the at least one second signal to the second device on a licensed carrier, wherein N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

2. The method according to claim 1, wherein N1ᵢ = 15 x 2^{k} kHz, k is an integer greater than or equal to 4 and less than or equal to 8, and N3ᵢ is an integral power of 2; or
N1ᵢ = 15 x 2^{k} kHz, k is an integer greater than or equal to 4 and less than or equal to 8, and N3ᵢ is a common multiple of 2 and 3; or
N1ᵢ = 15 x 2^{k} kHz, k is an integer greater than or equal to 4 and less than or equal to 8, and N3ᵢ is a common multiple of 2 and 5.

3. The method according to claim 2, wherein the first device is a network device, and the second device is a terminal device; and
before the sending, by the first device, the at least one first signal to a second device on an unlicensed carrier, the method further comprises:
sending, by the network device, first indication information to the terminal device on the licensed carrier or the unlicensed carrier, wherein the first indication information is used to indicate a granularity at which the terminal device receives the first signal on the unlicensed carrier.

4. The method according to claim 2, wherein before the sending, by the first device, the at least one first signal to a second device on an unlicensed carrier, the method further comprises:
sending, by the network device, second indication information to the terminal device on the unlicensed carrier, wherein the second indication information is used to indicate a quantity Xᵢ of available subcarriers of the terminal device in frequency domain, and N1ᵢ x Xᵢ < 400 MHz.

5. The method according to any one of claims 1 to 4, wherein the first device is the network device, and the second device is the terminal device; and
before the sending, by the first device, the at least one first signal to a second device on an unlicensed carrier, the method further comprises:
receiving, by the network device, reporting information of the terminal device on the licensed carrier, wherein the reporting information carries a field indicating that the terminal device supports an unlicensed carrier capability, and the field indicating that the terminal device supports the unlicensed carrier capability comprises at least one of a parameter indicating that the terminal device supports an unlicensed channel range, a parameter indicating that the terminal device supports a bandwidth sending capability, and a parameter indicating that the terminal device supports a bandwidth receiving capability; and
the sending, by the first device, the at least one first signal to a second device on an unlicensed carrier comprises:
sending, by the network device, the at least one first signal to the terminal device on an unlicensed channel supported by the terminal device, wherein the unlicensed channel comprises the unlicensed carrier, and a frequency domain range of the first signal is less than or equal to the bandwidth receiving capability supported by the terminal device.

6. The method according to any one of claims 1 to 5, wherein the first device is the network device, the second device is the terminal device, when there are a plurality of first signals, the plurality of first signals comprise a discovery signal, the discovery signal comprises a synchronization block signal SS-Block, and N2ᵢ is greater than or equal to 256; and
the sending, by the first device, the at least one first signal to a second device on an unlicensed carrier comprises:
sending, by the network device, the SS-Block to the terminal device by using 256 subcarriers in the N2ᵢ available subcarrier centers in the unlicensed carrier.

7. The method according to any one of claims 1 to 5, wherein the first device is the network device, the second device is the terminal device, when there are a plurality of first signals, the plurality of first signals comprise a discovery signal, the discovery signal comprises an SS-Block, the N2ᵢ available subcarriers in the unlicensed carrier comprise at least one subband, and a quantity of subcarriers comprised in each subband is greater than or equal to 256; and
the sending, by the first device, the at least one first signal to a second device on an unlicensed carrier comprises:
sending, by the network device, the SS-Block to the terminal device by using 256 subcarriers in each subband center.

8. The method according to any one of claims 1 to 7, wherein the first device is the network device, the second device is the terminal device, the first signal comprises a plurality of primary synchronization signals PSSs, secondary synchronization signals SSSs, and physical broadcast channels PBCHs, and the N2ᵢ available subcarriers in the unlicensed carrier comprise at least a first subband and a second subband; and
the sending, by the first device, the at least one first signal to a second device on an unlicensed carrier comprises:
sending, by the first device, the PSS, the SSS, and the PBCH in the first subband by using a first antenna array; and
sending, by the first device, the PSS, the SSS, and the PBCH in the second subband by using a second antenna array, wherein the first antenna array is different from the second antenna array, and the first subband is different from the second subband.

9. The method according to any one of claims 1 to 8, wherein the first device is the network device, the second device is the terminal device, and the first signal comprises at least the PBCH; and
the sending, by the first device, the at least one first signal to a second device on an unlicensed carrier comprises:
sending, by the network device, the PBCH to the terminal device on the unlicensed carrier, wherein the PBCH carries a first field, and the first field is a field that is not carried in a PBCH sent by the network device on the licensed carrier; or the first field is different from a second field, and the second field is a field that corresponds to the first field and that is carried in a PBCH sent by the network device on the licensed carrier.

10. The method according to any one of claims 1 to 9, wherein the first device is the network device, the second device is the terminal device, and the first signal comprises a scheduling signal; and
the sending, by the first device, the at least one first signal to a second device on an unlicensed carrier comprises:
sending, by the network device, the scheduling signal to a plurality of terminal devices on the unlicensed carrier, wherein the scheduling signal is used to indicate that a total bandwidth of uplink signals sent by the plurality of terminal devices on the unlicensed carrier is greater than or equal to 70% of 2.16 GHz; or
the first device is the network device, the second device is the terminal device, and the second signal comprises a scheduling signal; and
the sending, by the first device, the at least one second signal to the second device on a licensed carrier comprises:
sending, by the network device, the scheduling signal to a plurality of terminal devices on the licensed carrier, wherein the scheduling signal is used to indicate that a total bandwidth of uplink signals sent by the plurality of terminal devices on the unlicensed carrier is greater than or equal to 70% of 2.16 GHz.

11. The method according to claim 10, wherein after the sending, by the network device, the scheduling signal to a plurality of terminal devices, the method further comprises:
receiving, by the network device on the unlicensed carrier, a sixth signal sent by the terminal device, wherein a bandwidth of the sixth signal is greater than or equal to 70% of 2.16 GHz; and
despreading, by the network device, the received sixth signal, to obtain a fifth signal, wherein a despreading factor of the despreading is W, the fifth signal occupies P contiguous available subcarriers, P is less than or equal to N2ᵢ/W, and both P and W are integers.

12. The method according to any one of claims 1 to 11, wherein the first device is the terminal device, the second device is the network device, and the first signal comprises an uplink beam training signal.

13. A signal receiving method, comprising:
receiving, by a second device on an unlicensed carrier, at least one first signal sent by a first device, wherein the first signal is generated based on an i^{th} set of parameters in a first parameter, the first parameter comprises I sets of parameters, the i^{th} set of parameters comprises a subcarrier spacing N1ᵢHz, a quantity N2ᵢ of available subcarriers, and a quantity N3ᵢ of discrete Fourier transform IDFT points, and I ≥ i ≥ 1; and
receiving, by the second device on a licensed carrier, at least one second signal sent by the first device, wherein the second signal is generated based on a j^{th} set of parameters in a second parameter, the second parameter comprises J sets of parameters, the j^{th} set of parameters comprises a subcarrier spacing N4ⱼ, a quantity N5ⱼ of available subcarriers, and a quantity N6ⱼ of IDFT points, J ≥ j ≥ 1, N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

14. A first device, comprising:
a processor, configured to generate at least one first signal based on an i^{th} set of parameters in a first parameter, wherein the first parameter comprises I sets of parameters, the i^{th} set of parameters comprises a subcarrier spacing N1ᵢHz, a quantity N2ᵢ of available subcarriers, and a quantity N3ᵢ of discrete Fourier transform IDFT points, and I ≥ i ≥ 1; and
a transceiver, configured to send the at least one first signal to a second device on an unlicensed carrier, wherein
the processor is further configured to generate at least one second signal based on a j^{th} set of parameters in a second parameter, wherein the second parameter comprises J sets of parameters, the j^{th} set of parameters comprises a subcarrier spacing N4ⱼ, a quantity N5ⱼ of available subcarriers, and a quantity N6ⱼ of IDFT points, and J ≥ j ≥ 1; and
the transceiver is further configured to send the at least one second signal to the second device on a licensed carrier, wherein N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ).

15. The device according to claim 14, wherein N1ᵢ = 15 x 2^{k} kHz, k is an integer greater than or equal to 4 and less than or equal to 8, and N3ᵢ is an integral power of 2; or
N1ᵢ = 15 x 2^{k} kHz, k is an integer greater than or equal to 4 and less than or equal to 8, and N3ᵢ is a common multiple of 2 and 3; or
N1ᵢ = 15 x 2^{k} kHz, k is an integer greater than or equal to 4 and less than or equal to 8, and N3ᵢ is a common multiple of 2 and 5.

16. The device according to claim 15, wherein the first device is a network device, and the second device is a terminal device; and
the transceiver is further configured to send first indication information to the terminal device on the licensed carrier or the unlicensed carrier, wherein the first indication information is used to indicate a granularity at which the terminal device receives the first signal on the unlicensed carrier.

17. The device according to claim 15, wherein the transceiver is further configured to send second indication information to the terminal device on the unlicensed carrier, wherein the second indication information is used to indicate a quantity Xᵢ of available subcarriers of the terminal device in frequency domain, and N1ᵢ x Xᵢ < 400 MHz.

18. The device according to any one of claims 14 to 17, wherein the first device is the network device, and the second device is the terminal device;
the transceiver is further configured to receive reporting information of the terminal device on the licensed carrier, wherein the reporting information carries a field indicating that the terminal device supports an unlicensed carrier capability, and the field indicating that the terminal device supports the unlicensed carrier capability comprises at least one of a parameter indicating that the terminal device supports an unlicensed channel range, a parameter indicating that the terminal device supports a bandwidth sending capability, and a parameter indicating that the terminal device supports a bandwidth receiving capability; and
when sending the at least one first signal to the second device on the unlicensed carrier, the transceiver is specifically configured to:
send the at least one first signal to the terminal device on an unlicensed channel supported by the terminal device, wherein the unlicensed channel comprises the unlicensed carrier, and a frequency domain range of the first signal is less than or equal to the bandwidth receiving capability supported by the terminal device.

19. The device according to any one of claims 14 to 18, wherein the first device is the network device, the second device is the terminal device, when there are a plurality of first signals, the plurality of first signals comprise a discovery signal, the discovery signal comprises a synchronization block signal SS-Block, and N2ᵢ is greater than or equal to 256; and
when sending the at least one first signal to the second device on the unlicensed carrier, the transceiver is specifically configured to send the SS-Block to the terminal device by using 256 subcarriers in the N2ᵢ available subcarrier centers in the unlicensed carrier.

20. The device according to any one of claims 14 to 18, wherein the first device is the network device, the second device is the terminal device, when there are a plurality of first signals, the plurality of first signals comprise a discovery signal, the discovery signal comprises an SS-Block, the N2ᵢ available subcarriers in the unlicensed carrier comprise at least one subband, and a quantity of subcarriers comprised in each subband is greater than or equal to 256; and
when sending the at least one first signal to the second device on the unlicensed carrier, the transceiver is specifically configured to send the SS-Block to the terminal device by using 256 subcarriers in each subband center.

21. The device according to any one of claims 14 to 20, wherein the first device is the network device, the second device is the terminal device, the first signal comprises a plurality of primary synchronization signals PSSs, secondary synchronization signals SSSs, and physical broadcast channels PBCHs, and the N2ᵢ available subcarriers in the unlicensed carrier comprise at least a first subband and a second subband; and
when sending the at least one first signal to the second device on the unlicensed carrier, the transceiver is specifically configured to:
send the PSS, the SSS, and the PBCH in the first subband by using a first antenna array; and
send the PSS, the SSS, and the PBCH in the second subband by using a second antenna array, wherein the first antenna array is different from the second antenna array, and the first subband is different from the second subband.

22. The device according to any one of claims 14 to 21, wherein the first device is the network device, the second device is the terminal device, and the first signal comprises at least the PBCH; and
when sending the at least one first signal to the second device on the unlicensed carrier, the transceiver is specifically configured to:
send the PBCH to the terminal device on the unlicensed carrier, wherein the PBCH carries a first field, and the first field is a field that is not carried in a PBCH sent by the network device on the licensed carrier; or the first field is different from a second field, and the second field is a field that corresponds to the first field and that is carried in a PBCH sent by the network device on the licensed carrier.

23. The device according to any one of claims 14 to 22, wherein the first device is the network device, the second device is the terminal device, and the first signal comprises a scheduling signal; and
when sending the at least one first signal to the second device on the unlicensed carrier, the transceiver is specifically configured to:
send the scheduling signal to a plurality of terminal devices on the unlicensed carrier, wherein the scheduling signal is used to indicate that a total bandwidth of uplink signals sent by the plurality of terminal devices on the unlicensed carrier is greater than or equal to 70% of 2.16 GHz; or
the first device is the network device, the second device is the terminal device, and the second signal comprises a scheduling signal; and
when sending the at least one second signal to the second device on the licensed carrier, the transceiver is specifically configured to:
send the scheduling signal to a plurality of terminal devices on the licensed carrier, wherein the scheduling signal is used to indicate that a total bandwidth of uplink signals sent by the plurality of terminal devices on the unlicensed carrier is greater than or equal to 70% of 2.16 GHz.

24. The device according to claim 23, wherein the transceiver is further configured to receive, on the unlicensed carrier, a sixth signal sent by the terminal device, wherein a bandwidth of the sixth signal is greater than or equal to 70% of 2.16 GHz; and
the processor is further configured to despread the received sixth signal, to obtain a fifth signal, wherein a despreading factor of the despreading is W, the fifth signal occupies P contiguous available subcarriers, P is less than or equal to N2ᵢ/W, and both P and W are integers.

25. The device according to any one of claims 14 to 24, wherein the first device is the terminal device, the second device is the network device, and the first signal comprises an uplink beam training signal.

26. A second device, comprising:
a transceiver, configured to receive, on an unlicensed carrier, at least one first signal sent by a first device, wherein the first signal is generated based on an i^{th} set of parameters in a first parameter, the first parameter comprises I sets of parameters, the i^{th} set of parameters comprises a subcarrier spacing N1ᵢHz, a quantity N2ᵢ of available subcarriers, and a quantity N3ᵢ of discrete Fourier transform IDFT points, and I ≥ i ≥ 1, wherein
the transceiver is further configured receive, on a licensed carrier, at least one second signal sent by the first device, wherein the second signal is generated based on a j^{th} set of parameters in a second parameter, the second parameter comprises J sets of parameters, the j^{th} set of parameters comprises a subcarrier spacing N4ⱼ, a quantity N5ⱼ of available subcarriers, and a quantity N6ⱼ of IDFT points, J ≥ j ≥ 1, N1ᵢ, N2ᵢ, N3ᵢ, N4ⱼ, N5ⱼ, N6ⱼ, I, and J are all integers, N1ᵢ x N3ᵢ is greater than or equal to 1.512 GHz, max(N1ᵢ) ≥ max(N4ⱼ), and max(N3ᵢ) ≤ max(N6ⱼ); and
a processor, configured to process the first signal and the second signal.

27. A readable storage medium, comprising an instruction, wherein when the instruction is run on a computer, the computer is enabled to perform the method according to any one of claims 1 to 13.

28. A chip, wherein the chip comprises an input interface, an output interface, at least one processor, and at least one memory, the at least one memory is configured to store code, the at least one processor is configured to execute the code in the memory, and when the code is executed, the processor implements the method according to any one of claims 1 to 13.
